# EUROPEAN PATENT APPLICATION

(11) **EP 4 087 318 A1**
(43) Date of publication of application: **09.11.2022**
(21) Application number: 21760714.2
(22) Date of filing: 29.01.2021
(51) Int. Cl.: H04W 36/00

(54) **SWITCHING METHOD AND COMMUNICATION APPARATUS**

(30) Priority: 27.02.2020 CN 202010125620
(71) Applicant: Huawei Technologies Co., Ltd., Shenzhen, Guangdong 518129 (CN)
(72) Inventor: WANG, Rui, Shenzhen, Guangdong 518129 (CN); HAN, Feng, Shenzhen, Guangdong 518129 (CN); DAI, Mingzeng, Shenzhen, Guangdong 518129 (CN)
(74) Representative: Isarpatent
(86) International application number: PCT/CN2021/074503
(87) International publication number: WO 2021/169732

(57) **Abstract**

A handover method and a communication apparatus are provided. The method includes: After sending a handover command to a terminal device, a source network device sends, to a target network device, at least one data packet that is not successfully received by the terminal device, so that after the terminal device accesses the target network device, the target network device sends, to the terminal device, the at least one data packet received from the source network device. Because the data packet forwarded by the source network device to the target network device includes a data packet on which the source network device has performed PDCP processing and for which no acknowledgment response from the terminal device is received, a data loss of the terminal device in an inter-system handover process can be effectively avoided.

## Description

### CROSS-REFERENCE TO RELATED APPLICATION

This application claims priority to Chinese Patent Application No. 202010125620.3, filed with the China National Intellectual Property Administration on February 27, 2020 and entitled "HANDOVER METHOD AND COMMUNICATION APPARATUS", which is incorporated herein by reference in its entirety.

### TECHNICAL FIELD

This application relates to the field of wireless communication technologies, and in particular, to a handover method and a communication apparatus.

### BACKGROUND

When a terminal device moves between coverage areas of different communication systems, an inter-system handover occurs. During the inter-system handover, the terminal device first disconnects from a source network device to interrupt data transmission, and after accessing a target network device, the terminal device performs data transmission with the target network device. If a communication system in which the source network device is located and a communication system in which the target network device is located process data inconsistently, in an inter-system handover process, data of the terminal device may be lost. Consequently, service experience of a user is affected.

### SUMMARY

Embodiments of this application provide a handover method and a communication apparatus, to avoid a data loss of a terminal device in an inter-system handover process.

According to a first aspect, an embodiment of this application provides a handover method. The method may be performed by a source network device, and the method includes: The source network device sends a handover command to a terminal device, where the handover command indicates to hand over the terminal device from the source network device to a target network device, and the source network device and the target network device use different radio access technologies; and the source network device sends, to the target network device, at least one data packet that is not successfully received by the terminal device, where the at least one data packet that is not successfully received by the terminal device includes one or both of the following data packets: a data packet on which packet data convergence protocol PDCP processing has been performed and for which no acknowledgment response from the terminal device is received, and a data packet on which PDCP processing is not performed.

According to the foregoing technical solution, after sending the handover command to the terminal device, the source network device may further send, to the target network device, the at least one data packet that is not successfully received by the terminal device, so that after the terminal device accesses the target network device, the target network device may send, to the terminal device, the at least one data packet received from the source network device. Because the data packet forwarded by the source network device to the target network device includes the data packet on which the source network device has performed PDCP processing and for which no acknowledgment response from the terminal device is received, a data loss of the terminal device in an inter-system handover process can be effectively avoided.

In a possible design of the first aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the first aspect, when the at least one data packet that is not successfully received by the terminal device includes the data packet on which PDCP processing has been performed and for which no acknowledgment response from the terminal device is received, the source network device may remove a service data adaptation protocol SDAP header from the data packet, and then send, to the target network device, the data packet from which the SDAP header is removed.

In a possible design of the first aspect, when the at least one data packet that is not successfully received by the terminal device includes the data packet on which PDCP processing is not performed, the source network device may map the data packet to a corresponding DRB, and then send, to the target network device, the data packet mapped to the corresponding DRB, where the data packet does not include an SDAP header.

According to the foregoing technical solution, the source network device removes the SDAP header from the data packet on which PDCP processing has been performed and for which no acknowledgment response from the terminal device is received, and after mapping, to the DRB, the data packet on which PDCP processing is not performed, the source network device directly sends the data packet. In this way, none of the data packet sent by the source network device to the target network device includes an SDAP header, and the data packet forwarded by the target network device to the terminal device does not include an SDAP header either. In this way, after accessing the target network device, the terminal device can correctly receive and decode the data packet received from the target network device.

In a possible design of the first aspect, when the at least one data packet that is not successfully received by the terminal device includes the data packet on which PDCP processing has been performed and for which no acknowledgment response from the terminal device is received, the source network device may send the data packet to the target network device, where the data packet includes an SDAP header.

According to the foregoing technical solution, before the source network device sends, to the target network device, the data packet on which PDCP processing has been performed and for which no acknowledgment response from the terminal device is received, the source network device may alternatively not remove the SDAP header from the data packet. Instead, the terminal device separately processes the data packet including the SDAP header and the data packet not including the SDAP header that are received from the target network device. In this way, the terminal device can also correctly receive and decode the data packets received from the target network device.

In a possible design of the first aspect, the method further includes: The source network device may send, to the target network device, a PDCP sequence number corresponding to the data packet on which PDCP processing has been performed and for which no acknowledgment response from the terminal device is received; and/or the source network device may further send, to the target network device, a first PDCP sequence number that can be allocated by the target network device.

According to the foregoing technical solution, when allocating PDCP sequence numbers to the data packet that is received from the source network device and on which PDCP processing is not performed and a data packet received from a core network, the target network device can continue to use or extend a PDCP sequence number on the source network device side. Therefore, the terminal device can perform in-sequence submission and deduplication processing based on the PDCP sequence numbers of the data packets in an inter-system handover process.

According to a second aspect, an embodiment of this application provides a handover method. The method may be performed by a target network device, and the method includes: The target network device receives, from a source network device, at least one data packet that is not successfully received by a terminal device, where the at least one data packet that is not successfully received by the terminal device includes one or both of the following data packets: a data packet on which the source network device has performed packet data convergence protocol PDCP processing and for which no acknowledgment response from the terminal device is received, and a data packet on which the source network device does not perform PDCP processing, and the source network device and the target network device use different radio access technologies; and after the terminal device accesses the target network device, the target network device sends, to the terminal device, the at least one data packet that is not successfully received by the terminal device.

According to the foregoing technical solution, the target network device may receive, from the source network device, the at least one data packet that is not successfully received by the terminal device, and send the at least one data packet to the terminal device after the terminal device accesses the target network device. Because the at least one data packet includes the data packet on which the source network device has performed PDCP processing and for which no acknowledgment response from the terminal device is received, a data loss of the terminal device in an inter-system handover process can be effectively avoided.

In a possible design of the second aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the second aspect, the data packet, received by the target network device from the source network device, on which the source network device has performed PDCP processing and for which no acknowledgment response from the terminal device is received does not include a service data adaptation protocol SDAP header. Optionally, the source network device may remove the SDAP header from the data packet before sending the data packet to the target network device.

According to the foregoing technical solution, because the data packet that is sent by the target network device to the terminal device and on which the source network device has performed PDCP processing does not include an SDAP header, after accessing the target network device, the terminal device can correctly receive and decode the data packet received from the target network device.

In a possible design of the second aspect, the data packet, received by the target network device from the source network device, on which the source network device has performed PDCP processing and for which no acknowledgment response from the terminal device is received includes an SDAP header. The method further includes: The target network device sends an end marker packet to the terminal device, where the end marker packet indicates that sending of the data packet including the SDAP header is completed.

According to the foregoing technical solution, alternatively, the source network device may directly send, to the target network device without removing the SDAP header, the data packet on which PDCP processing has been performed and for which no acknowledgment response from the terminal device is received. In this way, the data packet sent by the target network device to the terminal device may include the data packet including the SDAP header and/or the data packet not including the SDAP header. The end marker packet is sent to the terminal device, so that the terminal device can identify, based on the end marker packet, the data packet including the SDAP header and the data packet not including the SDAP header that are received from the target network device, to separately process the data packet including the SDAP header and the data packet not including the SDAP header. In this way, the data packets can be correctly received and decoded.

In a possible design of the second aspect, the method further includes: The target network device may receive, from the source network device, a PDCP sequence number corresponding to the data packet on which the source network device has performed PDCP processing and for which no acknowledgment response from the terminal device is received; and/or the target network device may receive, from the source network device, a first PDCP sequence number that can be allocated by the target network device.

According to the foregoing technical solution, the target network device may continue to use or extend a PDCP sequence number of the source network device, and continue to allocate PDCP sequence numbers to the data packet that is received from the source network device and on which PDCP processing is not performed and a data packet received from a core network. Therefore, the terminal device can perform in-sequence submission and deduplication processing based on the PDCP sequence numbers of the data packets in an inter-system handover process.

According to a third aspect, an embodiment of this application provides a handover method. The method may be performed by a terminal device, and the method includes: The terminal device receives a handover command from a source network device, where the handover command indicates to hand over the terminal device from the source network device to a target network device, and the source network device and the target network device use different radio access technologies; the terminal device accesses the target network device, and receives an end marker packet from the target network device; and the terminal device identifies, based on the end marker packet, a data packet including a service data adaptation protocol SDAP header and/or a data packet not including an SDAP header in a data packet received from the target network device.

According to the foregoing technical solution, the terminal device may identify, based on the end marker packet received from the target network device, the data packet including the SDAP header and/or the data packet not including the SDAP header that are/is received from the target network device, and then separately process the data packet including the SDAP header and the data packet not including the SDAP header. Therefore, the data packets can be correctly received and decoded, and a data loss of the terminal device in an inter-system handover process is avoided.

In a possible design of the third aspect, the terminal device may identify, based on a packet data convergence protocol PDCP sequence number corresponding to the end marker packet, the data packet including the SDAP header and/or the data packet not including the SDAP header in the data packet received from the target network device.

In a possible design of the third aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the third aspect, when the terminal device identifies that the data packet received from the target network device includes an SDAP header, a PDCP entity in the terminal device may perform PDCP processing on the data packet, and then sends the data packet to an SDAP entity in the terminal device. The SDAP entity removes the SDAP header from the data packet. When the terminal device identifies that the data packet received from the target network device does not include an SDAP header, the PDCP entity in the terminal device may perform PDCP processing on the data packet. However, after PDCP processing is performed on the data packet, the data packet does not need to be sent to the SDAP entity, to remove the SDAP header.

According to the foregoing technical solution, none of the data packet submitted by the PDCP entity in the terminal device to an upper layer may include an SDAP header, so that the upper layer of the PDCP layer in the terminal device can correctly receive and decode data.

In a possible design of the third aspect, the SDAP entity in the terminal device may send, to an upper layer, the data packet from which the SDAP header is removed; or the PDCP entity in the terminal device may receive, from the SDAP entity, the data packet from which the SDAP header is removed, and after sorting the one or more data packets based on one or more PDCP sequence numbers of the one or more data packets, send the one or more data packets to an upper layer in sequence.

According to a fourth aspect, an embodiment of this application provides a handover method. The method may be performed by a source network device, and the method includes: The source network device sends a handover command to a terminal device, where the handover command indicates to hand over the terminal device from the source network device to a target network device, and the source network device and the target network device use different radio access technologies; the source network device continues to send a data packet to the terminal device, and the source network device sends at least one data packet of the terminal device to the target network device, where the at least one data packet of the terminal device is a data packet on which the source network device has performed packet data convergence protocol PDCP processing; and after receiving first indication information indicating that the terminal device has successfully accessed the target network device, the source network device stops sending the data packet to the terminal device.

According to the foregoing technical solution, after sending the handover command to the terminal device, the source network device may continue to send the data packet to the terminal device, and send, to the target network device, the at least one data packet that is of the terminal device and on which PDCP processing has been performed. After receiving, from the target network device, the first indication information indicating that the terminal device has successfully accessed the target network device, the source network device then stops sending the data packet to the terminal device. In this way, the terminal device and the network device are not disconnected in an inter-system handover process, thereby improving service continuity of the terminal device.

In a possible design of the fourth aspect, the source network device continues to send the data packet to the terminal device by using a PDCP entity; and the source network device may send, to the target network device, the at least one data packet that is of the terminal device and that is processed by the PDCP entity.

According to the foregoing technical solution, the source network device may use a same PDCP entity to continue to send the data packet to the terminal device and forward the data packet to the target network device, so that a data loss of the terminal device in an inter-system handover process is avoided.

In a possible design of the fourth aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the fourth aspect, the source network device may remove a service data adaptation protocol SDAP header from the at least one data packet of the terminal device, and then send, to the target network device, the at least one data packet from which the SDAP header is removed.

According to the foregoing technical solution, none of the at least one data packet sent by the source network device to the target network device includes an SDAP header, and the at least one data packet forwarded by the target network device to the terminal device does not include an SDAP header either. In this way, after accessing the target network device, the terminal device can correctly receive and decode the data packet received from the target network device.

In a possible design of the fourth aspect, the source network device may send the at least one data packet of the terminal device to the target network device, where the data packet includes an SDAP header.

According to the foregoing technical solution, before sending the at least one data packet of the terminal device to the target network device, the source network device may alternatively not remove the SDAP header from the data packet. Instead, the terminal device separately processes the data packet including the SDAP header and the data packet not including the SDAP header that are received from the target network device. In this way, the terminal device can also correctly receive and decode the data packets received from the target network device.

In a possible design of the fourth aspect, the method further includes: The source network device may send, to the target network device, a PDCP sequence number corresponding to the data packet on which PDCP processing has been performed; and/or the source network device may send, to the target network device, a first PDCP sequence number that can be allocated by the target network device.

According to the foregoing technical solution, when allocating a PDCP sequence number to a data packet received from a core network, the target network device can continue to use or extend a PDCP sequence number on the source network device side. Therefore, the terminal device can perform in-sequence submission and deduplication processing based on the one or more PDCP sequence numbers of the one or more data packets in an inter-system handover process.

According to a fifth aspect, an embodiment of this application provides a handover method. The method may be performed by a target network device, and the method includes: The target network device receives at least one data packet of a terminal device from a source network device, where the source network device and the target network device use different radio access technologies; after the terminal device accesses the target network device, the target network device sends the at least one data packet to the terminal device, where the at least one data packet is a data packet on which the source network device has performed packet data convergence protocol PDCP processing; and the target network device sends first indication information to the source network device, where the first indication information indicates that the terminal device has successfully accessed the target network device.

According to the foregoing technical solution, the target network device may receive the at least one data packet of the terminal device from the source network device, send the at least one data packet to the terminal device after the terminal device accesses the target network device, and send, to the source network device, the first indication information indicating that the terminal device has successfully accessed the target network device. In this way, the terminal device and the network device are not disconnected in an inter-system handover process, thereby improving service continuity of the terminal device.

In a possible design of the fifth aspect, the target network device may send second indication information to the terminal device, where the second indication information indicates the terminal device to stop receiving a data packet from the source network device, so that the terminal device completes an inter-system handover process.

In a possible design of the fifth aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the fifth aspect, the data packet on which the source network device has performed PDCP processing does not include a service data adaptation protocol SDAP header. Optionally, the source network device may remove the SDAP header from the data packet before sending, to the target network device, the data packet on which PDCP processing has been performed.

According to the foregoing technical solution, because the target network device may forward, to the terminal device, at least one data packet not including an SDAP header, after accessing the target network device, the terminal device can correctly receive and decode the data packet received from the target network device.

In a possible design of the fifth aspect, the data packet on which the source network device has performed PDCP processing includes an SDAP header. The method further includes: The target network device sends an end marker packet to the terminal device, where the end marker packet indicates that sending of the data packet including the SDAP header is completed.

According to the foregoing technical solution, alternatively, the source network device may directly send, to the target network device without removing the SDAP header, the data packet on which PDCP processing has been performed. In this way, the data packet sent by the target network device to the terminal device may include the data packet including the SDAP header and/or the data packet not including the SDAP header. The end marker packet is sent to the terminal device, so that the terminal device can identify, based on the end marker packet, the data packet including the SDAP header and the data packet not including the SDAP header that are received from the target network device, to separately process the data packet including the SDAP header and the data packet not including the SDAP header. In this way, the data packets can be correctly received and decoded.

In a possible design of the fifth aspect, the method further includes: The target network device receives, from the source network device, a PDCP sequence number corresponding to the data packet on which the source network device has performed PDCP processing; and/or the target network device receives, from the source network device, a first PDCP sequence number that can be allocated by the target network device.

According to the foregoing technical solution, the target network device may continue to use or extend a PDCP sequence number of the source network device, and continue to allocate a PDCP sequence number to a data packet received from a core network. Therefore, the terminal device can perform in-sequence submission and deduplication processing based on the one or more PDCP sequence numbers of the one or more data packets in an inter-system handover process.

According to a sixth aspect, an embodiment of this application provides a handover method. The method may be performed by a terminal device, and the method includes: The terminal device receives a handover command from a source network device, where the handover command indicates to hand over the terminal device from the source network device to a target network device, and the source network device and the target network device use different radio access technologies; the terminal device continues to receive a data packet from the source network device by using a packet data convergence protocol PDCP entity; and the terminal device accesses the target network device, and receives at least one data packet from the target network device by using the PDCP entity.

According to the foregoing technical solution, after receiving the handover command from the source network device, the terminal device may continue to receive the data packet from the source network device and access the target network device, and receive, from the target network device by using a same PDCP entity, the at least one data packet forwarded by the target network device. In this way, the terminal device and the network device are not disconnected in an inter-system handover process, thereby improving service continuity of the terminal device.

In a possible design of the sixth aspect, that the source network device and the target network device use different radio access technologies may be reflected as follows: Protocol stacks corresponding to the terminal device and the source network device each include SDAP layer processing, and none of protocol stacks corresponding to the terminal device and the target network device includes SDAP layer processing.

In a possible design of the sixth aspect, the data packet received by the terminal device from the source network device includes a service data adaptation protocol SDAP header. The method further includes: The PDCP entity performs PDCP processing on the data packet received from the source network device, and sends, to an SDAP entity in the terminal device, the data packet on which PDCP processing is performed, to remove the SDAP header. Optionally, the SDAP entity may send, to an upper layer, the data packet from which the SDAP header is removed; or the PDCP entity may further receive, from the SDAP entity, the data packet from which the SDAP header is removed, and then the PDCP entity sends, to an upper layer, the data packet from which the SDAP header is removed. In this way, the terminal device may correctly receive and decode the data packet received from the source network device.

In a possible design of the sixth aspect, the data packet received by the terminal device from the target network device does not include an SDAP header. Optionally, the source network device may remove the SDAP header from the data packet before sending the data packet to the target network device. The method further includes: The PDCP entity performs PDCP processing on the data packet received from the target network device.

According to the foregoing technical solution, because the data packet sent by the target network device to the terminal device does not include an SDAP header, the terminal device may correctly receive and decode the data packet received from the target network device.

In a possible design of the sixth aspect, the data packet received by the terminal device from the target network device includes a data packet including an SDAP header and/or a data packet not including an SDAP header. The method further includes: The PDCP entity receives an end marker packet from the target network device; and the PDCP entity identifies, based on the end marker packet, the data packet including the SDAP header and/or the data packet not including the SDAP header in the data packet received from the target network device.

According to the foregoing technical solution, alternatively, the source network device may directly send, to the target network device without removing the SDAP header, the data packet on which PDCP processing has been performed and for which no acknowledgment response from the terminal device is received. In this way, the data packet sent by the target network device to the terminal device may include the data packet including the SDAP header and/or the data packet not including the SDAP header. The data packet including the SDAP header may be a data packet received by the target network device from the source network device, and the data packet not including the SDAP header may be a data packet received by the target network device from a core network. The end marker packet is sent to the terminal device, so that the terminal device can identify, based on the end marker packet, the data packet including the SDAP header and the data packet not including the SDAP header that are received from the target network device, to separately process the data packet including the SDAP header and the data packet not including the SDAP header. In this way, the data packets can be correctly received and decoded.

In a possible design of the sixth aspect, when the terminal device identifies the data packet that is received from the target network device and that includes the SDAP header, the method further includes: The PDCP entity performs PDCP processing on the data packet, and sends, to the SDAP entity, the data packet on which PDCP processing has been performed, to remove the SDAP header; and the PDCP entity receives, from the SDAP entity, the data packet from which the SDAP header is removed. When the terminal device identifies the data packet that is received from the target network device and that does not include the SDAP header, the method further includes: The PDCP entity performs PDCP processing on the data packet.

According to the foregoing technical solution, that the terminal device separately processes the data packet including the SDAP header and the data packet not including the SDAP header that are received from the target network device may be as follows: After performing PDCP processing on the data packet, the PDCP entity then sends, to the SDAP entity, the data packet including the SDAP header, to remove the SDAP header. In this way, none of the data packet submitted to an upper layer may include an SDAP header, so that all the data packets can be correctly received and decoded.

In a possible design of the sixth aspect, the PDCP entity includes a first processing unit and a second processing unit, the first processing unit corresponds to a security configuration of the source network device, and the second processing unit corresponds to a security configuration of the target network device. The method further includes: The PDCP entity performs, by using the first processing unit, PDCP processing on the data packet received from the source network device, and performs, by using the second processing unit, PDCP processing on the data packet received from the target network device.

According to the foregoing technical solution, the PDCP entity in the terminal device may be of a dual active stack structure. In other words, the PDCP entity may include two processing units, and the processing units respectively correspond to the security configuration of the source network device and the security configuration of the target network device. In this way, the terminal device may perform, by using different processing units in the PDCP entity, PDCP processing on the data packet received from the source network device and the data packet received from the target network device, so that normal PDCP processing can be performed on both the data packet received from the source network device and the data packet received from the target network device, thereby enhancing applicability of the handover method, avoiding a problem that data processing fails because PDCP security configurations used by the source network device and the target network device are inconsistent.

In a possible design of the sixth aspect, the method further includes: The PDCP entity performs, based on PDCP sequence numbers of the data packets, sorting and/or deduplication processing on the data packet received from the source network device and the data packet received from the target network device; and the PDCP entity sends the processed data packets to an upper layer in sequence.

According to a seventh aspect, an embodiment of this application provides a communication apparatus. The apparatus has a function of implementing the source network device in any one of the first aspect or the possible designs of the first aspect, has a function of implementing the target network device in any one of the second aspect or the possible designs of the second aspect, has a function of implementing the source network device in any one of the fourth aspect or the possible designs of the fourth aspect, or has a function of implementing the target network device in any one of the fifth aspect or the possible designs of the fifth aspect. The apparatus may be a network device, or may be a chip included in the network device. The function of the communication apparatus may be implemented by hardware, or may be implemented by hardware by executing corresponding software. The hardware or the software includes one or more modules, units, or means (means) corresponding to the function.

Alternatively, the apparatus may have a function of implementing the terminal device in any one of the fourth aspect or the possible designs of the fourth aspect, or have a function of implementing the terminal device in any one of the sixth aspect or the possible designs of the sixth aspect. The apparatus may be a terminal device, or may be a chip included in the terminal device. The function of the communication apparatus may be implemented by hardware, or may be implemented by hardware by executing corresponding software. The hardware or the software includes one or more modules, units, or means (means) corresponding to the function.

In a possible design, a structure of the apparatus includes a processing module and a transceiver module. The processing module is configured to support the apparatus in performing a corresponding function of the source network device in any one of the first aspect or the designs of the first aspect, perform a corresponding function of the target network device in any one of the second aspect or the designs of the second aspect, perform a corresponding function of the source network device in any one of the fourth aspect or the possible designs of the fourth aspect, perform a corresponding function of the target network device in any one of the fifth aspect or the possible designs of the fifth aspect, perform a corresponding function of the terminal device in any one of the sixth aspect or the possible designs of the sixth aspect, or perform a corresponding function of the terminal device in any one of the seventh aspect or the possible designs of the seventh aspect. The transceiver module is configured to support communication between the apparatus and another communication device. For example, when the apparatus is a source network device, the apparatus may send, to the target network device, at least one data packet that is not successfully received by the terminal device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, to enable the apparatus to perform the method in any one of the first aspect or the possible designs of the first aspect, perform the method in any one of the second aspect or the possible designs of the second aspect, perform the method in any one of the third aspect or the possible designs of the third aspect, perform the method in any one of the fourth aspect or the possible designs of the fourth aspect, perform the method in any one of the fifth aspect or the possible designs of the fifth aspect, or perform the method in any one of the sixth aspect or the possible designs of the sixth aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or the terminal device, the communication interface may be an input/output interface of the chip. Optionally, the transceiver may be a transceiver circuit, and the input/output interface may be an input/output circuit.

According to an eighth aspect, an embodiment of this application provides a chip system, including a processor. The processor is coupled to a memory, the memory is configured to store a program or instructions; and when the program or the instructions are executed by the processor, the chip system is enabled to implement the method in any one of the first aspect or the possible designs of the first aspect, implement the method in any one of the second aspect or the possible designs of the second aspect, implement the method in any one of the third aspect or the possible designs of the third aspect, implement the method in any one of the fourth aspect or the possible designs of the fourth aspect, implement the method in any one of the fifth aspect or the possible designs of the fifth aspect, or implement the method in any one of the sixth aspect or the possible designs of the sixth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software codes stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

According to a ninth aspect, an embodiment of this application provides a computer-readable storage medium. The computer-readable storage medium stores a computer program or instructions; and when the computer program or the instructions are executed, a computer is enabled to perform the method in any one of the first aspect or the possible designs of the first aspect, perform the method in any one of the second aspect or the possible designs of the second aspect, perform the method in any one of the third aspect or the possible designs of the third aspect, perform the method in any one of the fourth aspect or the possible designs of the fourth aspect, perform the method in any one of the fifth aspect or the possible designs of the fifth aspect, or perform the method in any one of the sixth aspect or the possible designs of the sixth aspect.

According to a tenth aspect, an embodiment of this application provides a computer program product. When a computer reads and executes the computer program product, the computer is enabled to perform the method in any one of the first aspect or the possible designs of the first aspect, perform the method in any one of the second aspect or the possible designs of the second aspect, perform the method in any one of the third aspect or the possible designs of the third aspect, perform the method in any one of the fourth aspect or the possible designs of the fourth aspect, perform the method in any one of the fifth aspect or the possible designs of the fifth aspect, or perform the method in any one of the sixth aspect or the possible designs of the sixth aspect.

According to an eleventh aspect, an embodiment of this application provides a communication system. The communication system includes the foregoing source network device, target network device, and at least one terminal device. Optionally, the communication system may further include a core network device.

### BRIEF DESCRIPTION OF DRAWINGS

FIG. 1a to FIG. 1c each are a schematic diagram of an application scenario to which an embodiment of this application is applicable;
FIG. 2 is a schematic flowchart of a handover method according to an embodiment of this application;
FIG. 3a is a schematic diagram of air interface protocol stacks in a communication system using a first communication standard according to an embodiment of this application;
FIG. 3b is a schematic diagram of air interface protocol stacks in a communication system using a second communication standard according to an embodiment of this application;
FIG. 4A and FIG. 4B are a schematic diagram of a first implementation of a handover method in a first scenario according to an embodiment of this application;
FIG. 5A and FIG. 5B are a schematic diagram of a second implementation of a handover method in a first scenario according to an embodiment of this application;
FIG. 6A and FIG. 6B are a schematic diagram of an implementation of a handover method in a second scenario according to an embodiment of this application;
FIG. 7 is a schematic flowchart of another handover method according to an embodiment of this application;
FIG. 8A and FIG. 8B are a schematic diagram of a first implementation of another handover method in a first scenario according to an embodiment of this application;
FIG. 9A and FIG. 9B are a schematic diagram of a second implementation of another handover method in a first scenario according to an embodiment of this application;
FIG. 10 is a schematic diagram of a structure of a communication apparatus according to an embodiment of this application;
FIG. 11 is a schematic diagram of another structure of a communication apparatus according to an embodiment of this application;
FIG. 12 is a schematic diagram of another structure of another communication apparatus according to an embodiment of this application; and
FIG. 13 is a schematic diagram of another structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) communication system or a new radio (new radio, NR) system, or is used in a future communication system or another similar communication system.

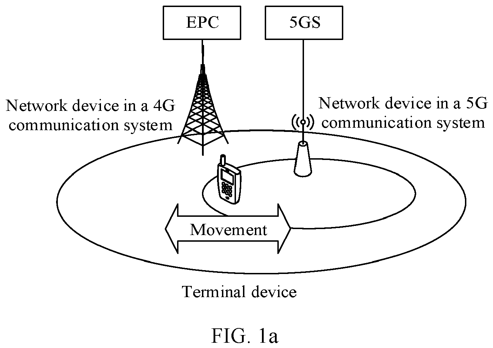

The technical solutions provided in embodiments of this application are applicable to a scenario in which communication systems using different communication standards coexist. FIG. 1a to FIG. 1c each are a schematic diagram of an application scenario to which an embodiment of this application is applicable, or a schematic diagram of a network architecture to which an embodiment of this application is applicable. The network architecture includes a source network device, a target network device, and a terminal device. The source network device is a network device accessed by the terminal device before handover, the target network device is a network device accessed by the terminal device after handover, and the source network device and the target network device use different radio access technologies (radio access technologies, RATs). Alternatively, it may be understood that the source network device and the target network device are network devices in communication systems using different communication standards. In this way, the technical solutions provided in embodiments of this application may support handover of the terminal device between the communication systems using different communication standards.

For example, the terminal device may be handed over between a 5G communication system and a 4G communication system. The source network device may be a network device in the 5G communication system, and the target network device may be a network device in the 4G communication system. Alternatively, the source network device may be a network device in the 4G communication system, and the target network device may be a network device in the 5G communication system. It should be understood that the 5G communication system may also be referred to as a 5G system for short, and the 4G communication system may also be referred to as a 4G system for short. In the 5G communication system, a core network connected to the network device is referred to as a 5th generation core (5th generation core, 5GC) network. In the 4G communication system, a core network connected to the network device is referred to as an evolved packet core (evolved packet core, EPC).

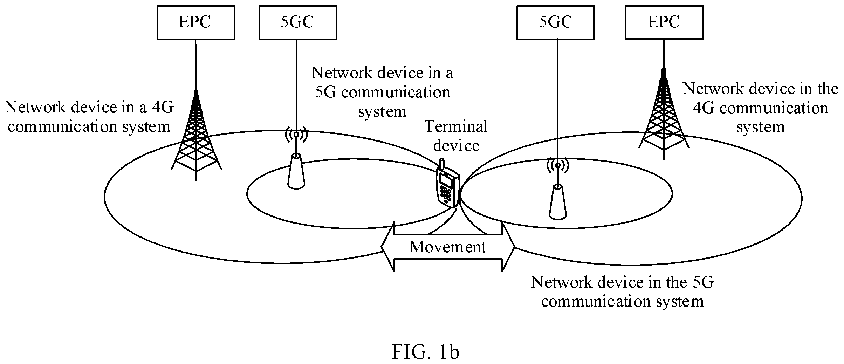

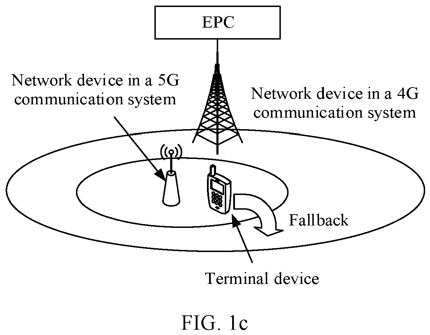

Embodiments of this application may cover a plurality of different handover scenarios. As shown in FIG. 1a to FIG. 1c, there is an overlapping area between a coverage area of the 5G communication system and a coverage area of the 4G communication system. In FIG. 1a, an inter-system handover may occur on the terminal device due to location movement. For example, the terminal device is handed over from the 5G communication system to the 4G communication system, or handed over from the 4G communication system to the 5G communication system. In FIG. 1b, an inter-system handover from single connectivity to dual connectivity or multiple-connectivity may further occur on the terminal device due to location movement. For example, the terminal device is handed over from single connectivity in the 5G communication system to dual connectivity in both the 5G communication system and the 4G communication system. In FIG. 1c, because different communication systems may support different service types, an inter-system handover may occur on the terminal device due to a change of a service that is performed. In other words, access network fallback (fall back) may occur.

It should be understood that FIG. 1a to FIG. 1c each are described by using an example in which the terminal device is handed over between the 5G communication system and the 4G communication system. However, this is merely an example, and constitutes no limitation on this application. Similarly, the handover scenarios in embodiments of this application are also not limited to the handover scenarios in FIG. 1a to FIG. 1c.

It should be further understood that the handover may be a handover between single connectivity and dual connectivity, or may be a handover between single connectivity and multiple-connectivity. Dual connectivity (dual connectivity, DC) means that a terminal device simultaneously accesses two network devices, where one network device is a master network device, and the other network device is a secondary network device. The master network device may also be referred to as a master node (master node, MN), and the secondary network device may also be referred to as a secondary node (secondary node, SN). Similar to this, multi-connectivity means that a terminal device simultaneously accesses a plurality of network devices, where one network device is a master network device, and one or more other network devices are secondary network devices.

Currently, the terminal device may support evolved universal terrestrial radio access and new radio dual connectivity (E-UTRA NR dual connectivity, EN-DC). In an EN-DC mode, one of two network devices simultaneously accessed by the terminal device is a network device in the 4G communication system, and the other one is a network device in the 5G communication system. The network device in the 4G communication system is a master network device, and the network device in the 5G communication system is a secondary network device. With evolution of systems, a future terminal device may further support new radio and evolved universal terrestrial radio access dual connectivity (NR E-UTRA dual connectivity, NE-DC). In an NE-DC mode, one of two network devices simultaneously accessed by the terminal device is a network device in the 4G communication system, and the other one is a network device in the 5G communication system. The network device in the 5G communication system is a master network device, and the network device in the 4G communication system is a secondary network device. In addition, the terminal device may further support 5GC evolved universal terrestrial radio access and new radio dual connectivity (Next Generation E-UTRA NR dual connectivity, NGEN-DC) and dual connectivity NR-DC between NRs.

Dual connectivity (dual connectivity, DC) includes a master cell group (master cell group, MCG) and a secondary cell group (secondary cell group, SCG). The MCG may include one or more carriers. If the MCG includes a plurality of carriers, carrier aggregation (carrier aggregation, CA) may be performed among the carriers. The SCG may include one or more carriers. If the SCG includes a plurality of carriers, CA may be performed among the carriers. The master network device is responsible for MCG scheduling, and the secondary network device is responsible for SCG scheduling.

The following explains and describes some terms in embodiments of this application, to help a person skilled in the art have a better understanding.
(1) The terminal device is a device having a wireless transceiver function, and may be deployed on land, where the deployment includes indoor or outdoor, handheld, wearable, or vehicle-mounted deployment, may be deployed on water (for example, on a ship), or may be deployed in air (for example, on an airplane, a balloon, and a satellite). The terminal device may communicate with a core network through a radio access network (radio access network, RAN), and exchange voice and/or data with the RAN. The terminal device may be a mobile phone (mobile phone), a tablet (Pad), a computer with a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal device may also be sometimes referred to as user equipment (user equipment, UE), a mobile station, a remote station, or the like. A specific technology, a device form, and a name that are used by the terminal device are not limited in embodiments of this application.
   By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is more than a hardware device, and implements powerful functions through software support, data exchange, and cloud interaction. In a broad sense, the wearable intelligent device includes full-featured and large-sized devices that can implement all or some functions without depending on smartphones, for example, smart watches or smart glasses, and devices that focus on only one type of application function and need to work with other devices such as smartphones, for example, various smart bands, smart helmets, or smart jewelry for monitoring physical signs.
   The terminal device in embodiments of this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle to implement the method in this application.
(2) The network device, also referred to as an access network device, is a device that is in a network and that is configured to connect the terminal device to a wireless network. The network device may be a node in a radio access network, and may also be referred to as a base station, or may be referred to as a radio access network (radio access network, RAN) node (or device). The network device may be configured to mutually convert a received over-the-air frame and an internet protocol (IP) packet and serve as a router between the terminal device and a rest part of the access network, where the rest part of the access network may include an IP network. The network device may coordinate attribute management of an air interface. The network device may include an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario, or may include a next generation NodeB (next generation NodeB, gNB) in a 5th generation (5th generation, 5G) mobile communication technology new radio (new radio, NR) system, or may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a baseband pool BBU pool, a Wi-Fi access point (access point, AP), or the like, or may further include a centralized unit (centralized unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol.
(3) It should be noted that the terms "system" and "network" may be used interchangeably in embodiments of this application. "A plurality of' means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of the description such as "at least one type" is similar. The term "and/or" describes an association relationship for describing associated objects and represents that three relationships may exist. For example, A and/or B may represent the following three cases: Only A exists, both A and B exist, and only B exists. In addition, the character "/", unless otherwise specified, usually indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

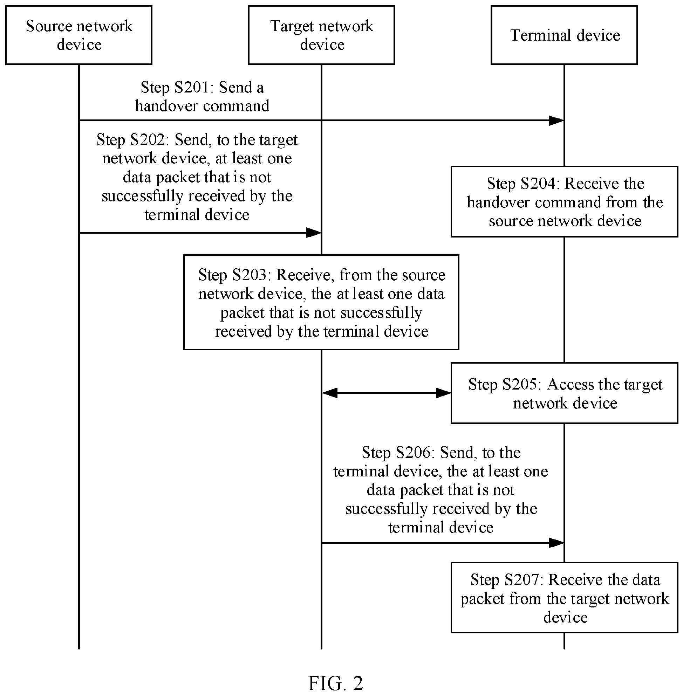

FIG. 2 is a schematic flowchart of a handover method according to an embodiment of this application. The method specifically includes the following steps.

Step S201: A source network device sends a handover command to a terminal device, where the handover command indicates to hand over the terminal device from the source network device to a target network device.

In this embodiment of this application, before the source network device sends the handover command to the terminal device, the terminal device may access the source network device, and perform data transmission with the source network device.

The handover command may be a handover command message or handover command signaling. This is not limited.

Step S202: The source network device sends, to the target network device, at least one data packet that is not successfully received by the terminal device.

The at least one data packet that is not successfully received by the terminal device is at least one data packet that the source network device considers to not be successfully received by the terminal device, that is, all of currently possible data packets that are not successfully received by the terminal device.

The at least one data packet that is not successfully received by the terminal device may include a data packet that has been sent by the source network device to the terminal device and for which no acknowledgment response from the terminal device is received, and a data packet that is not sent by the source network device to the terminal device. The data packet that has been sent by the source network device to the terminal device and for which no acknowledgment response from the terminal device is received may be a data packet on which the source network device has performed packet data convergence protocol (packet data convergence protocol, PDCP) processing, for example, a packet data convergence protocol protocol data unit (packet data convergence protocol protocol data unit, PDCP PDU). The data packet that is not sent by the source network device to the terminal device may include a data packet on which the source network device has performed PDCP processing, for example, the PDCP PDU, or may include a data packet on which the source network device does not perform PDCP processing by using a PDCP layer, for example, a packet data convergence protocol service data unit (packet data convergence protocol service data unit, PDCP SDU), and may further include fresh data (fresh data) received by the source network device from a core network device.

It should be understood that, in this embodiment of this application, the data packet that has been sent by the source network device to the terminal device and for which no acknowledgment response from the terminal device is received does not definitely indicate that the data packet is not successfully received by the terminal device, or the data packet is not to be successfully received by the terminal device subsequently. It is possible that the data packet has been successfully received by the terminal device, but the terminal device does not send an acknowledgment response to the source network device; it is possible that the data packet has been successfully received by the terminal device, and the terminal device sends an acknowledgment response to the source network device, but the source network device does not receive the acknowledgment response; or it is possible that the data packet is not successfully received by the terminal device currently, but is to be successfully received by the terminal device subsequently, and the terminal device sends, to the source network device, an acknowledgment response corresponding to the data packet.

It should be further understood that a sequence of performing step S201 and step S202 is not limited in this application. For example, S201 is performed before S202, or S202 is performed before S201.

Step S203: The target network device receives, from the source network device, the at least one data packet that is not successfully received by the terminal device.

Step S204: The terminal device receives the handover command from the source network device.

In this embodiment of this application, after receiving the handover command from the source network device, the terminal device may disconnect from the source network device, and stop data transmission with the source network device.

Step S205: The terminal device accesses the target network device.

In this embodiment of this application, after receiving the handover command from the source network device, the terminal device may initiate a random access process and access the target network device.

Optionally, in step S206, after the terminal device accesses the target network device, the target network device may send, to the terminal device, the at least one data packet that is not successfully received by the terminal device. Correspondingly, in step S207, the terminal device may receive the at least one data packet from the target network device.

It can be learned that the source network device may forward, to the target network device, all of the currently possible data packets that are not successfully received by the terminal device, and the target network device sends the data packets to the terminal device. Therefore, a data loss of the terminal device in an inter-system handover process can be effectively avoided, thereby improving user experience.

Optionally, in an implementation of this application, the at least one data packet that is not successfully received by the terminal device and that is mentioned in step S202 may be further classified depending on whether the source network device performs PDCP processing on the data packet. To be specific, the at least one data packet that is not successfully received by the terminal device and that is mentioned in step S202 may include one or both of the following data packets: a data packet on which the source network device has performed PDCP processing and for which no acknowledgment response from the terminal device is received, and a data packet on which the source network device does not perform PDCP processing.

The data packet on which the source network device has performed PDCP processing and for which no acknowledgment response from the terminal device is received may include a data packet on which the source network device has performed PDCP processing and that has been sent by the source network device to the terminal device through an air interface, and a data packet on which the source network device has performed PDCP processing and that is not sent by the source network device to the terminal device.

That the source network device has performed PDCP processing may be understood as that the source network device performs, on the data packet, processing of all or some of function modules in the PDCP entity, for example, allocates a corresponding PDCP sequence number to the data packet. In this way, the data packet to which the PDCP sequence number has been allocated may be considered as a data packet on which PDCP processing has been performed.

Optionally, the data packet on which the source network device has performed PDCP processing may be a PDCP PDU. The data packet on which the source network device does not perform PDCP processing may include a data packet that is not sent by the source network device to the PDCP layer for PDCP processing, and a data packet (namely, fresh data) that is of the terminal device and that is newly received by the source network device from the core network device.

In the conventional technology, when a terminal device performs inter-system handover, a source network device does not forward, to a target network device, a data packet on which PDCP processing has been performed. Therefore, if the terminal device does not receive the data packet, it is equivalent to describing that the data packet is lost in a handover process. However, in this embodiment of this application, the at least one data packet forwarded by the source network device to the target network device may include the data packet on which the source network device has performed PDCP processing and for which no acknowledgment response from the terminal device is received, and the data packet on which the source network device does not perform PDCP processing. Therefore, the data loss of the terminal device in the inter-system handover process can be effectively avoided, thereby improving user experience.

In an application scenario, the source network device may be a network device in a communication system using a first communication standard. In the communication system using the first communication standard, air interface protocol stacks of the network device and the terminal device each include SDAP layer processing. The target network device may be a network device in a communication system using a second communication standard. In the communication system using the second communication standard, none of air interface protocol stacks of the network device and the terminal device includes SDAP layer processing. For example, the source network device may be an access network device in a 5G communication system, and the target network device may be an access network device in a 4G communication system.

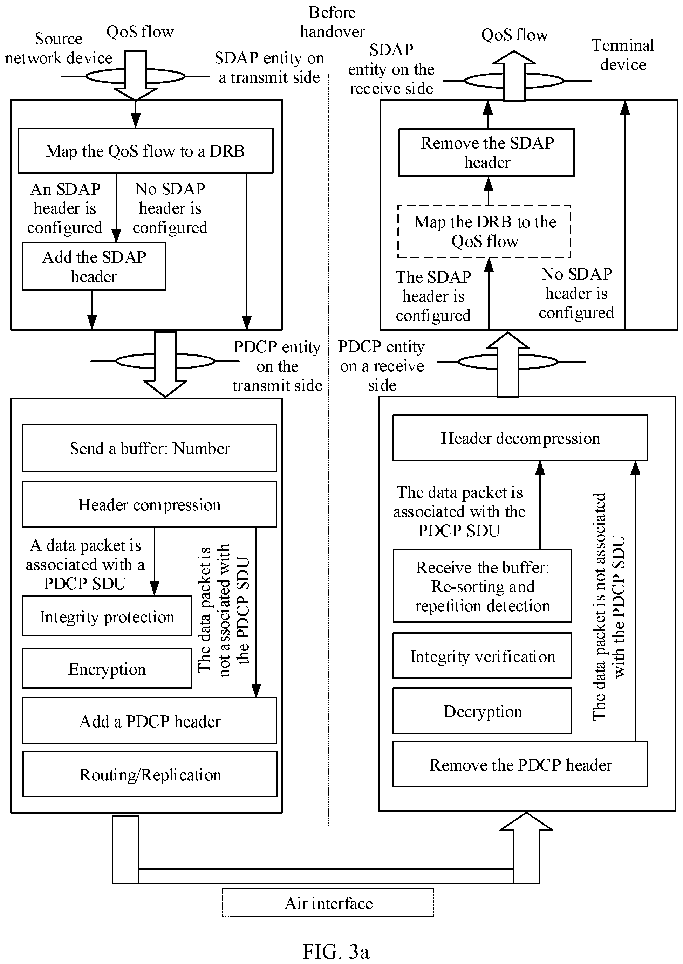

FIG. 3a is a schematic diagram of air interface protocol stacks of a network device and a terminal device in a communication system using a first communication standard according to an embodiment of this application. With reference to FIG. 3a, before an inter-system handover, a process in which a source network device sends data to a terminal device specifically includes: An SDAP entity in the source network device first maps, to a data radio bearer (data radio bearer, DRB), a quality of service (quality of service, QoS) flow of a data packet (packet) received from an upper layer. The DRB and a PDCP entity are in one-to-one correspondence, that is, one DRB corresponds to one PDCP entity. Then, the SDAP entity may perform other processing on the data packet. For example, if an SDAP header is configured, the SDAP entity may add the SDAP header to the data packet, to generate an SDAP PDU. The generated SDAP PDU may be used as a PDCP SDU and sent to the PDCP entity corresponding to the DRB for further processing. If no SDAP header is configured, the SDAP entity may directly send the data packet, as a PDCP SDU, to the PDCP entity corresponding to the DRB for further processing. After receiving the PDCP SDU from the SDAP entity, the PDCP entity may perform processing such as numbering, security protection (including integrity protection and/or encryption), and PDCP header addition on the PDCP SDU, to generate a PDCP PDU. Optionally, if necessary, the PDCP entity may further perform processing such as header compression, routing, and replication. This is not limited in this application. Further, the PDCP PDU generated by the PDCP entity may be sent to an RLC layer. After being further processed at the RLC layer, the PDCP PDU is sent to a MAC layer and a PHY layer, and is finally carried on an air interface for transmission.

Correspondingly, when receiving the data from the source network device, the terminal device may perform symmetric processing in a reverse direction. To be specific, the data is first processed at the PHY layer and the MAC layer, and then sent to the RLC layer, to obtain a PDCP PDU. Then, the obtained PDCP PDU is sent to the PDCP entity for processing such as PDCP header removal, security processing (including decryption and/or integrity verification), and re-sorting/repetition detection, to generate a PDCP SDU. The generated PDCP SDU may be sent, as an SDAP PDU, to the SDAP entity for processing. If there is an SDAP header, the SDAP entity needs to remove the SDAP header, then map an obtained data packet to a QoS flow by using the DRB corresponding to the PDCP entity, and send the obtained data packet to the upper layer.

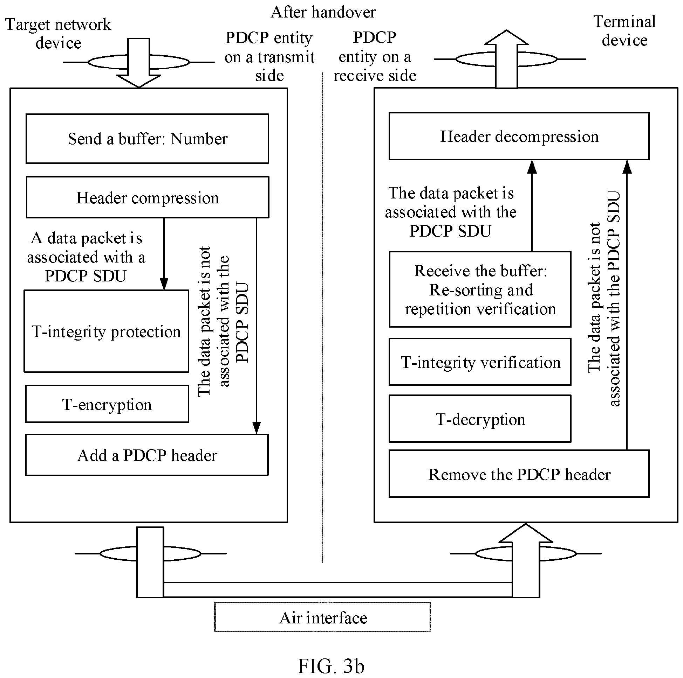

FIG. 3b is a schematic diagram of air interface protocol stacks of a network device and a terminal device in a communication system using a second communication standard according to an embodiment of this application. With reference to FIG. 3b, after an inter-system handover, in a process in which a target network device sends data to a terminal device, because no SDAP layer is configured in the protocol stacks of the network device and the terminal device, upper-layer data may be directly sent to a PDCP entity for processing. Specifically, after receiving a data packet from an upper layer, the PDCP entity may perform processing such as numbering, header compression, security protection (including integrity protection and/or encryption), and PDCP header addition on the data packet, to generate a PDCP PDU. Then, the generated PDCP PDU is sent to an RLC layer for further processing, and after being processed at a MAC layer and a PHY layer, the generated PDCP PDU is transmitted to the terminal device through an air interface. It can be learned that there is no SDAP processing in the data processing process, but PDCP processing and subsequent processing at the RLC layer, the MAC layer, the PHY layer, and the like are similar to processing on the source network device side shown in FIG. 3a. It should be further noted that the target network device may use a PDCP entity (for example, an NR PDCP entity) that is the same as that on the source network device side, or may use a different PDCP entity (for example, an E-UTRA PDCP entity). This is not limited in this application.

Correspondingly, when receiving the data from the source network device, the terminal device may perform symmetric processing in a reverse direction. To be specific, the data is first processed at the PHY layer and the MAC layer, and then sent to the RLC layer, to obtain a PDCP PDU. Then, the obtained PDCP PDU is sent to the PDCP entity for PDCP header removal, security processing (including decryption and/or integrity verification), re-sorting/repetition detection, and the like, to obtain a PDCP SDU, and then the PDCP SDU is sent to the upper layer.

It may be learned from FIG. 3a and FIG. 3b that, because different communication systems process data inconsistently, in step S202, the at least one data packet that is sent by the source network device to the target network device and that is not successfully received by the terminal device may include an SDAP header. If the source network device directly sends, to the target network device, the data packet including the SDAP header, and then the target network device forwards the data packet to the terminal device, because after the terminal device accesses the target network device, an air interface protocol stack that matches the target network device no longer includes SDAP layer processing, after receiving the data packet, the terminal device does not know the SDAP header in the data packet, and cannot process the SDAP header in the data packet. Consequently, data fails to be received and decoded.

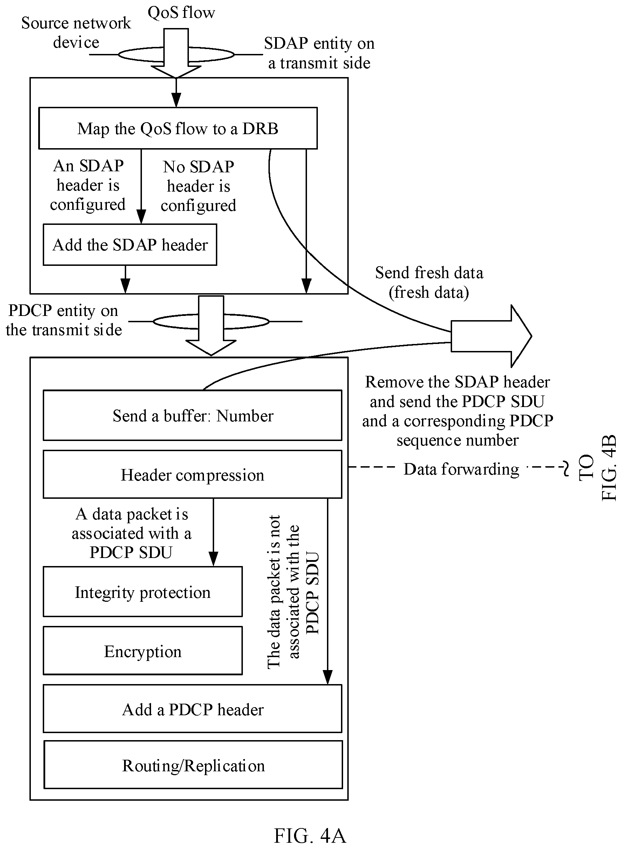

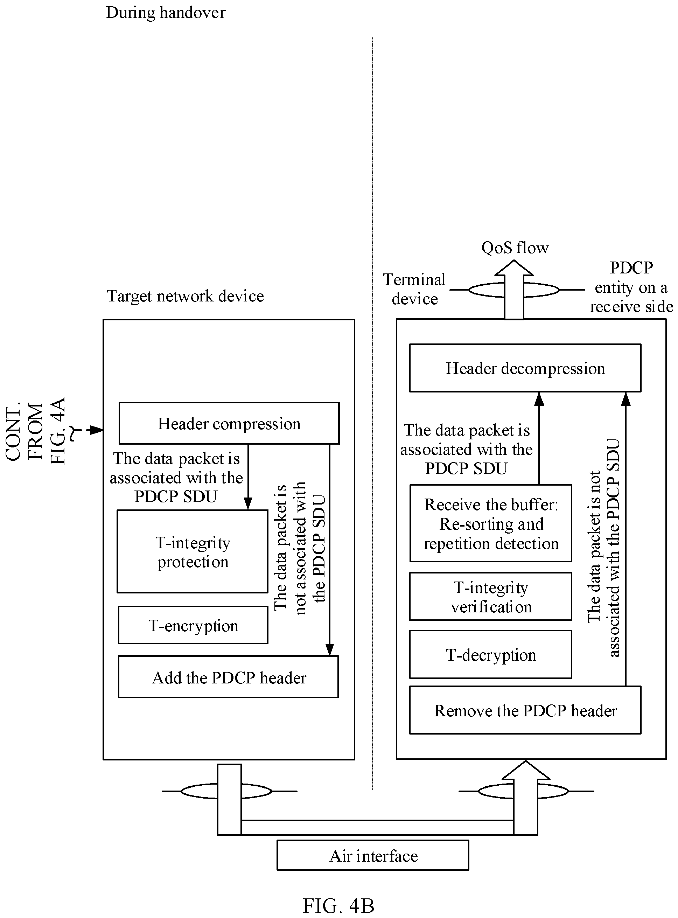

As shown in FIG. 4A and FIG. 4B, in a first possible implementation, for the data packet, in the at least one data packet that is not successfully received by the terminal device, for which the source network device has performed PDCP processing and for which no acknowledgment response from the terminal device is received, the source network device may remove an SDAP header from the data packet before sending the data packet to the target network device, and then send, to the target network device, the data packet from which the SDAP header is removed. Then, the target network device sends the data packet to the terminal device.

Considering that the source network device has allocated a corresponding PDCP sequence number to each data packet on which PDCP processing has been performed, the source network device may send, to the target network device together with each data packet on which PDCP processing has been performed and for which no acknowledgment response from the terminal device is received, a PDCP sequence number corresponding to the data packet. The source network device may further send, to the target network device, a first PDCP sequence number that can be allocated by the target network device. Because PDCP sequence numbers are usually allocated in sequence, the first PDCP sequence number that can be allocated by the target network device may be a PDCP sequence number following the PDCP sequence number that has been allocated by the source network device. In this way, the target network device may extend or continue to use the PDCP sequence number on the source network device side, and allocate PDCP sequence numbers to the data packet on which the source network device does not perform PDCP processing and a data packet that is of the terminal device and that is received by the target network device from the core network. Correspondingly, when receiving data packets from the target network device, the terminal device may perform in-sequence submission and repetition detection based on PDCP sequence numbers corresponding to the data packets. The terminal device may further send a PDCP status report to the target network device, to notify the target network device of the data packet that is not received by the terminal device.

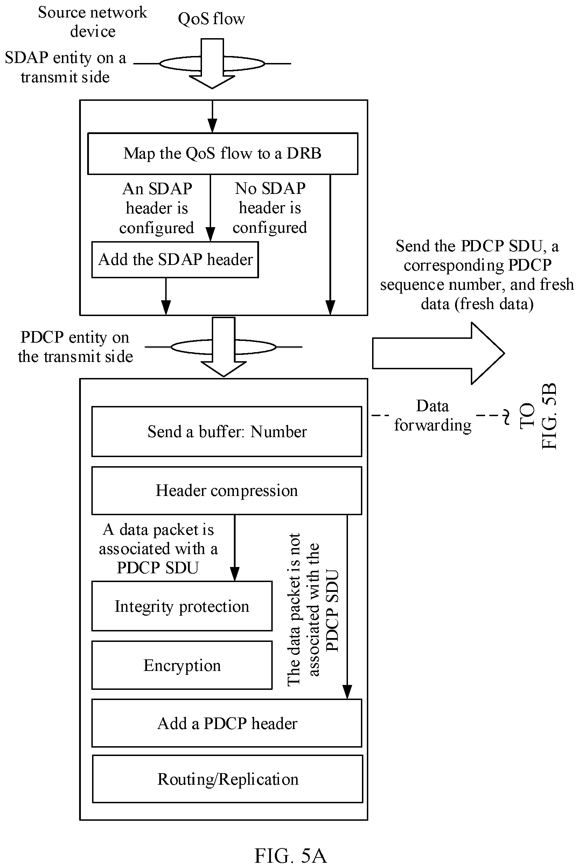

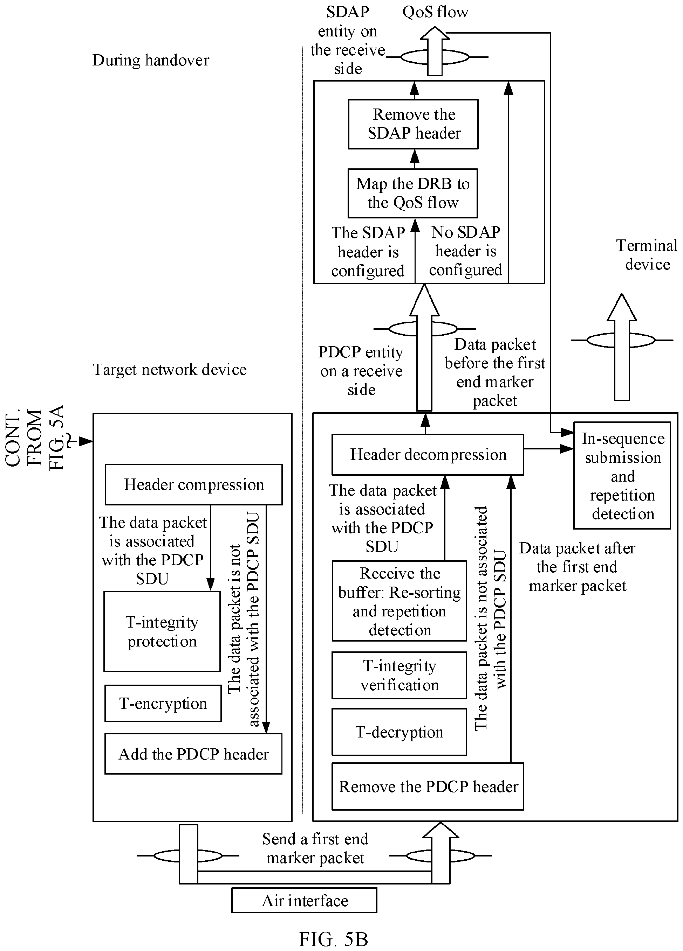

Optionally, the data packet on which the source network device has performed PDCP processing and for which no acknowledgment response from the terminal device is received may be a PDCP SDU. In other words, the source network device may remove the SDAP header from the PDCP SDU for which no acknowledgment response from the terminal device is received, and then send, to the target network device together with a corresponding PDCP sequence number, the PDCP SDU from which the SDAP header is removed. In this case, it may also be understood that an SDAP SDU and the PDCP sequence number are sent to the target network device. The PDCP SDU for which no acknowledgment response from the terminal device is received is sent to the target network device, so that the target network device can further process the received data packet by using the PDCP entity of the target network device, to generate a PDCP PDU. For example, the target network device may perform encryption and/or integrity protection on the received data packet by using a security mechanism of the target network device, for example, T-encryption and T-integrity protection shown in FIG. 5A and FIG. 5B. After being processed at the RLC layer, the MAC layer, the PHY layer, and the like, the data packet is sent to the terminal device through the air interface.

In this way, the data packet that is forwarded by the source network device and that is sent by the target network device to the terminal device can be correctly received and decoded by the terminal device. This avoids a problem that after accessing the target network device, the terminal device uses the protocol stack that matches the target network device, and cannot perform symmetric PDCP processing on the data packet on which the source network device has performed PDCP processing. The problem is caused because PDCP entities used on the source network device side and the target network device side are inconsistent.

It should be understood that, in this embodiment of this application, the source network device may remove the SDAP header at the PDCP layer, or may remove the SDAP header at the SDAP layer, or may remove the SDAP header in another manner, for example, remove the SDAP header at another layer in the protocol stack. This is not limited in this application.

For the data packet, in the at least one data packet that is not successfully received by the terminal device, on which the source network device does not perform PDCP processing, the source network device may map the data packet to a corresponding DRB, without adding an SDAP header to the data packet, and then send, to the target network device, the data packet mapped to the DRB. If the source network device has performed SDAP processing on some data packets and added SDAP headers to the data packets, but does not sent the data packets to the PDCP layer, the source network device also needs to remove the added SDAP headers from the data packets, and then send, to the target network device, the data packets from which the SDAP headers are removed. Correspondingly, after receiving the data packet on which the source network device does not perform PDCP processing, the target network device may process the data packet by using the PDCP entity of the target network device. After being processed at the RLC layer, the MAC layer, the PHY layer, and the like, the data packet is sent to the terminal device through the air interface.

It should be noted that, different from the data packet on which the source network device has performed PDCP processing, the source network device does not allocate a corresponding PDCP sequence number to the data packet on which the source network device does not perform PDCP processing. Therefore, the source network device does not send, to the target network device, the PDCP sequence number corresponding to the data packet. The target network device may independently allocate a PDCP sequence number to the data packet on which the source network device does not perform PDCP processing, and perform PDCP processing. For example, starting from the first allocable PDCP sequence number received by the source network device, the target network device may allocate a corresponding PDCP sequence number to the data packet that is received from the source network device and on which the source network device does not perform PDCP processing.

It may be learned that, from a perspective of the target network device, neither the data packet that is received by the target network device from the source network device and on which the source network device has performed PDCP processing nor the data packet that is received by the target network device from the source network device and on which the source network device does not perform PDCP processing includes an SDAP header, and PDCP processing may be performed by the target network device on the PDCP SDU or fresh data forwarded by the source network device to the target network device. Therefore, the terminal device can correctly receive and decode the at least one data packet received from the target network device.

In a second possible implementation, as shown in FIG. 5A and FIG. 5B, when sending, to the target network device, the at least one data packet that is not successfully received by the terminal device, the source network device may not remove an SDAP header. In other words, the source network device may send, to the target network device, the at least one data packet that is not successfully received by the terminal device, where the at least one data packet that is not successfully received by the terminal device may include a data packet including an SDAP header and/or a data packet not including an SDAP header. In the at least one data packet that is not successfully received by the terminal device, the data packet on which the source network device has performed PDCP processing and for which no acknowledgment response from the terminal device is received includes an SDAP header added before PDCP processing is performed. In the at least one data packet that is not successfully received by the terminal device, the data packet on which the source network device does not perform PDCP processing does not include an SDAP header.

The target network device may receive, from the source network device, the at least one data packet that is not successfully received by the terminal device, and after the terminal device accesses the target network device, send, to the terminal device, the at least one data packet that is not successfully received by the terminal device and a first end marker packet, where the first end marker packet indicates that sending of the data packet including the SDAP header is completed.

In this way, the terminal device may identify, based on the first end marker packet, the data packet including the SDAP header and/or the data packet not including the SDAP header in the data packet received from the target network device, and separately process the data packet including the SDAP header and the data packet not including the SDAP header.

Specifically, the terminal device may identify, based on a PDCP sequence number of the first end marker packet, the data packet including the SDAP header and/or the data packet not including the SDAP header in the data packet received from the target network device. For example, when the first end marker packet is an empty data packet that is sent by the target network device to the terminal device and that is used to identify an end, the terminal device may consider that a data packet that is received from the target network device and whose PDCP sequence number is less than the PDCP sequence number of the first end marker packet includes an SDAP header, and a data packet that is received from the target network device and whose PDCP sequence number is greater than the sequence number of the first end marker packet does not include an SDAP header. For another example, when the first end marker packet is a last data packet, sent by the target network device to the terminal device, on which the source network device has performed PDCP processing and for which no acknowledgment response from the terminal device is received, the terminal device may consider that the first end marker packet and a data packet that is received from the target network device and whose PDCP sequence number is less than the PDCP sequence number of the first end marker packet each include an SDAP header, and a data packet that is received from the target network device and whose PDCP sequence number is greater than the sequence number of the first end marker packet does not include an SDAP header. Another implementation of the first end marker packet may alternatively be: The first end marker packet is sent by the target network device to the terminal device and is used to identify a first data packet not including an SDAP header. If a PDCP sequence number of the packet is N, a PDCP sequence number of a last data packet including an SDAP header is N-1. In other words, an SDAP header needs to be removed from each data packet whose PDCP sequence number is less than N, and none of data packets whose PDCP sequence numbers each are greater than or equal to N includes an SDAP header.

Further, for the data packet that includes the SDAP header and that is identified by the terminal device, for example, the data packet that is received by the terminal device from the target network device and whose PDCP sequence number is less than the PDCP sequence number of the first end marker packet, the terminal device may perform PDCP processing on the data packet by using the PDCP entity, send the data packet to an SDAP entity in the terminal device, to remove the SDAP header, and then submit the data packet to an upper layer, so that the data packet can be correctly received and decoded. It should be understood that the SDAP entity may directly submit, to the upper layer, the data packet from which the SDAP header is removed, or may send, back to the PDCP entity, the data packet from which the SDAP header is removed. As shown in FIG. 5A and FIG. 5B, the PDCP entity re-sorts the one or more data packets based on the one or more PDCP sequence numbers of the one or more data packets, and then submits the one or more data packets to the upper layer in sequence. The upper layer is an upper layer of a PDCP layer in the protocol stack that matches the target network device and that is established by the terminal device, that is, another protocol layer located above the PDCP layer in the protocol stack, which is referred to as an upper layer (upper layer) for short.

It should be noted that, in the conventional technology, during an inter-system handover, after receiving a handover command, a terminal device releases a configuration and a protocol stack (including a PDCP entity and an SDAP layer) of a source system, applies a configuration of a target system, and establishes a protocol stack that is equivalent to a target station. In the method included in this application, during an inter-system handover, after receiving the handover command, the terminal device may not release a PDCP entity and/or an SDAP layer that are/is equivalent to a source station. After processing the PDCP entity and/or the SDAP layer based on a configuration of a target system (for example, re-establishing the PDCP entity and using a security configuration of the target system), and after accessing a target station, the terminal device continues to receive and process a data packet by using the PDCP entity and/or the SDAP layer. Optionally, after successfully receiving and processing all data packets including SDAP headers (for example, all data packets whose PDCP sequence numbers each are less than the PDCP sequence number of the first end marker packet), and submitting the processed data packets to the upper layer, the terminal device releases the SDAP layer.

For the data packet that does not include the SDAP header and that is identified by the terminal device, for example, the data packet that is received by the terminal device from the target network device and whose PDCP sequence number is greater than the PDCP sequence number of the first end marker packet, the terminal device may perform PDCP processing on the data packet by using the PDCP entity, then re-sort the one or more data packets, and finally submit the one or more data packets to the upper layer in sequence.

The end marker packet described in this embodiment of this application may also be referred to as an end marker (end mark/end marker). It should be understood that the first end marker packet may be a last data packet, sent by the target network device to the terminal device, on which the source network device has performed PDCP processing and for which no acknowledgment response from the terminal device is received. The last data packet mentioned herein means that a PDCP sequence number of the data packet is the last one. Alternatively, the first end marker packet may be an empty data packet that is sent by the target network device to the terminal device and that is used to identify an end. The first end marker packet may include a flag. For example, a field in a packet header is set to a special value to indicate that the data packet is a first end marker packet. Another data packet whose PDCP sequence number is before that of the data packet is a data packet including an SDAP header. If the data packet is received, it may be considered that the target network device has completely sent the data packet including the SDAP header.

In this implementation, for the data packet on which the source network device has performed PDCP processing and for which no acknowledgment response from the terminal device is received, because the source network device has allocated a corresponding PDCP sequence number to the data packet, when sending the data packet to the target network device, the source network device may further send, to the target network device together with the data packet, the PDCP sequence number corresponding to each data packet. Further, the target network device then sends, to the terminal device, the data packet and the PDCP sequence number corresponding to the data packet. In this way, the terminal device can determine, based on the PDCP sequence number corresponding to the data packet, whether the data packet includes an SDAP header.

The source network device may further send, to the target network device, a first PDCP number that can be allocated by the target network device, so that the target network device allocates corresponding PDCP sequence numbers to the data packet on which the source network device does not perform PDCP processing and a data packet that is of the terminal device and that is received by the target network device from the core network. The PDCP sequence number allocated by the target network device may extend or continue to use the PDCP sequence number allocated on the source network device side. Therefore, the terminal device can perform data packet in-sequence submission and deduplication processing, PDCP status report reporting, and the like in an inter-system handover process, to improve service continuity of the terminal device.

Optionally, the data packet on which the source network device has performed PDCP processing and for which no acknowledgment response from the terminal device is received may be a PDCP SDU, and the PDCP SDU includes an SDAP header added before PDCP processing is performed. In this way, after receiving the PDCP SDU, the target network device may further process the PDCP SDU by using the PDCP entity of the target network device, to generate a PDCP PDU. After being processed at the RLC layer, the MAC layer, and the PHY layer, the PDCP PDU is then sent to the terminal device through the air interface.

Optionally, for the data packet on which the source network device does not perform PDCP processing, the source network device may directly send the data packet to the target network device, and the target network device performs PDCP processing on the data packet, to generate a PDCP PDU. After being processed at the RLC layer, the MAC layer, and the PHY layer, the PDCP PDU is then sent to the terminal device through the air interface. It should be noted that because the source network device does not allocate a corresponding PDCP sequence number to the data packet, the source network device does not send, to the target network device, the PDCP sequence number corresponding to the data packet either. Optionally, the data packet on which the source network device does not perform PDCP processing may be fresh data (namely, fresh data) received by the source network device from the core network. The fresh data is not processed by the SDAP layer of the source network device, and therefore does not include an SDAP header.

It should be noted that, for the foregoing two possible implementations shown in FIG. 4A and FIG. 4B and FIG. 5A and FIG. 5B, the source network device may send, to the target network device through a downlink data forwarding tunnel corresponding to a DRB, the at least one data packet that is not successfully received by the terminal device, for example, a PDCP SDU for which no acknowledgment response from the terminal device is received or fresh data (fresh data) that is received from the core network and that is mapped to the DRB. In other words, the data forwarding tunnel between the source network device and the target network device may be at a DRB granularity. To be specific, each DRB on which data forwarding needs to be performed may have a dedicated downlink data forwarding tunnel.

In addition, the source network device may receive, from the core network, a second end marker packet indicating the core network to stop sending data to the terminal device by using the source network device, and may send the second end marker packet to the target network device. Therefore, the target network device may learn, based on the second end marker packet, that sending of at least one marker packet that is forwarded by the source network device to the target network device and that is not successfully received by the terminal device has been completed. Then, the target network device may send, to the terminal device, the data packet received by the target network device from the core network.

The second end marker packet may be a last data packet, including valid data, that is of the terminal device and that is sent by the core network to the source network device, or an empty data packet that is sent by the core network and that is used to identify an end. The second end marker packet may include a flag. For example, a field in a packet header is set to a special value, to indicate the core network to stop sending data to the terminal device by using the source network device. The second end marker packet may also be at a DRB granularity. To be specific, the core network may send one second end marker packet for one DRB.

In another application scenario, the source network device may be a network device in a communication system using a second communication standard. In the communication system using the second communication standard, none of air interface protocol stacks of the network device and the terminal device includes SDAP layer processing. The target network device may be a network device in a communication system using a first communication standard. In the communication system using the first communication standard, air interface protocol stacks of the network device and the terminal device each include SDAP layer processing. For example, the source network device may be an access network device in a 4G communication system, and the target network device may be an access network device in a 5G communication system.

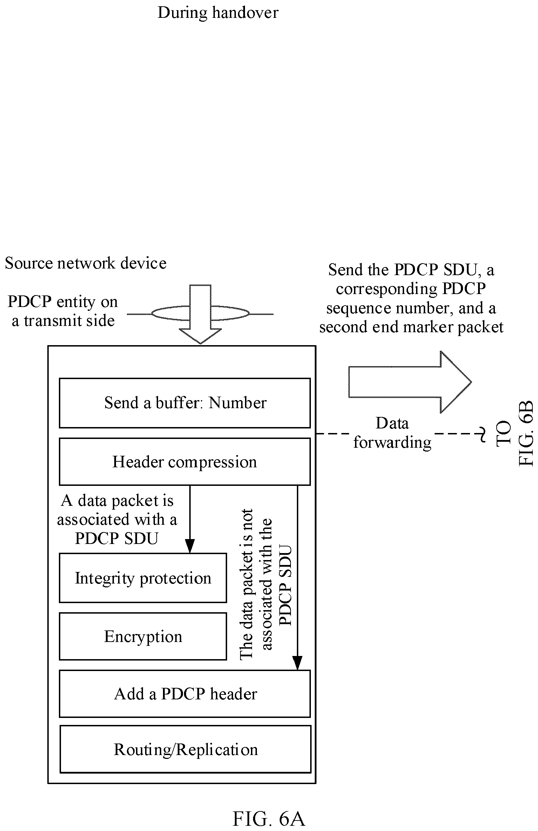

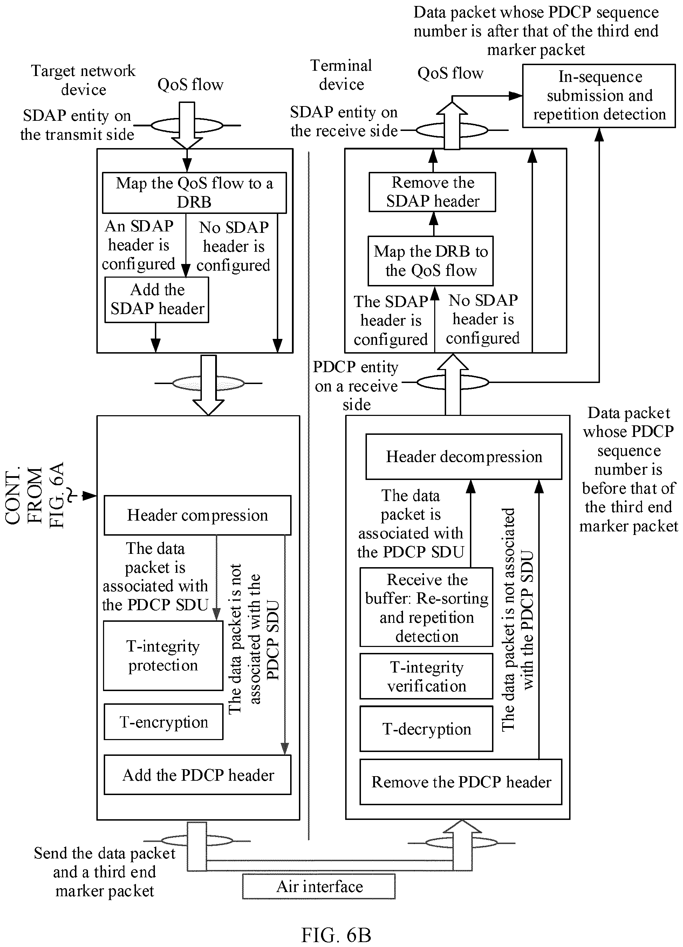

In this scenario, as shown in FIG. 6A and FIG. 6B, in a possible implementation, the source network device may send, to the target network device, the at least one data packet that is not successfully received by the terminal device, where the at least one data packet that is not successfully received by the terminal device may include one or both of the following data packets: the data packet on which the source network device has performed PDCP processing and for which no acknowledgment response from the terminal device is received, and the data packet on which the source network device does not perform PDCP processing. However, it should be noted that because the protocol stack of the source network device does not include SDAP layer processing, neither of the two types of data packets includes an SDAP header.

The target network device may receive, from the source network device, the at least one data packet that is not successfully received by the terminal device, and receive, from the core network, a data packet of the terminal device. After the terminal device accesses the target network device, the target network device may send, to the terminal device, the at least one data packet that is not successfully received by the terminal device and a third end marker packet, where the third end marker packet indicates that sending of the data packet not including the SDAP header has been completed, or sending of the at least one data packet that is received from the source network device and that is not successfully received by the terminal device has been completed.

Optionally, the target network device may further receive a second end marker packet from the source network device, where the second end marker packet indicates the core network to stop sending a data packet to the terminal device by using the source network device. The target network device may determine, based on the second end marker packet, that sending of the at least one data packet forwarded by the source network device to the target network device has been completed. For a specific implementation of the second end marker packet, refer to the foregoing description. Details are not described herein again. After receiving the second end marker packet, the target network device may send, to the terminal device, the data packet received from the core network. However, it should be noted that because the protocol stack of the target network device includes SDAP layer processing, the data packet that is received from the core network and that is sent by the target network device to the terminal device includes an SDAP header.

In this way, the terminal device may identify, based on the third end marker packet, the data packet not including the SDAP header and/or the data packet including the SDAP header in the data packet received from the target network device, and separately process the data packet including the SDAP header and the data packet not including the SDAP header.

Specifically, the terminal device may identify, based on a PDCP sequence number of the third end marker packet, the data packet not including the SDAP header and/or the data packet including the SDAP header in the data packet received from the target network device. For example, when the third end marker packet is an empty data packet that is sent by the target network device to the terminal device and that is used to identify an end, the terminal device may consider that a data packet that is received from the target network device and whose PDCP sequence number is less than the PDCP sequence number of the third end marker packet does not include an SDAP header, and a data packet that is received from the target network device and whose PDCP sequence number is greater than the PDCP sequence number of the third end marker packet includes an SDAP header. For another example, when the third end marker packet is a last data packet, sent by the target network device to the terminal device, on which the source network device has performed PDCP processing and for which no acknowledgment response from the terminal device is received, the terminal device may consider that neither the third end marker packet nor a data packet that is received from the target network device and whose PDCP sequence number is less than the PDCP sequence number of the third end marker packet includes an SDAP header, and a data packet that is received from the target network device and whose PDCP sequence number is greater than the sequence number of the third end marker packet includes an SDAP header. Another implementation of the third end marker packet may alternatively be: The third end marker packet is sent by the target network device to the terminal device and is used to identify a first data packet including an SDAP header. If a PDCP sequence number of the packet is N, a PDCP sequence number of a last data packet not including an SDAP header is N-1. In other words, none of data packets whose PDCP sequence numbers each are less than N includes an SDAP header, and an SDAP header needs to be removed from each data packet whose PDCP sequence number is greater than or equal to N.

Further, for the data packet that does not include the SDAP header and that is identified by the terminal device, for example, the data packet that is received by the terminal device from the target network device and whose PDCP sequence number is less than the PDCP sequence number of the third end marker packet, the terminal device may perform PDCP processing on the data packet by using the PDCP entity, and then submit the data packet to an upper layer in sequence after repetition detection.

For the data packet that includes the SDAP header and that is identified by the terminal device, for example, the data packet that is received by the terminal device from the target network device and whose PDCP sequence number is greater than the PDCP sequence number of the third end marker packet, the terminal device may perform PDCP processing on the data packet by using the PDCP entity, send the data packet to an SDAP entity, to remove the SDAP header, and then submit the data packet to the upper layer in sequence after repetition detection. It should be understood that the SDAP entity may directly submit, to the upper layer, the data packet from which the SDAP header is removed, or may send, back to the PDCP entity, the data packet from which the SDAP header is removed. The PDCP entity sorts the one or more data packets based on the one or more PDCP sequence numbers of the one or more data packets, and then submits the one or more data packets to the upper layer in sequence. Alternatively, the terminal device may include a sorting module. The SDAP entity may send, to the sorting module, the data packet from which the SDAP header is removed. The sorting module sorts the one or more data packets based on the one or more PDCP sequence numbers of the one or more data packets, and then submits the one or more data packets to the upper layer in sequence. The sorting module may be a part of a PDCP function, or may be a part of an SDAP function, or may be a new protocol layer in the protocol stack. This is not limited in this application.

It should be noted that the third end marker packet may be a last data packet, sent by the target network device to the terminal device, on which the source network device has performed PDCP processing and for which no acknowledgment response from the terminal device is received. The last data packet mentioned herein means that a PDCP sequence number of the data packet is the last one. Alternatively, the third end marker packet may be an empty data packet that is sent by the target network device to the terminal device and that is used to identify an end. The third end marker packet may include a flag. For example, a field in a packet header is set to a special value to indicate that the data packet is a third end marker packet. Another data packet whose PDCP sequence number is before that of the data packet is a data packet not including an SDAP header. If the data packet is received, it may be considered that the target network device has completely sent the data packet not including the SDAP header.

Optionally, the third end marker packet may alternatively be the second end marker packet, to be specific, an end marker packet that is received by the source network device from the core network and that indicates the core network to stop sending data to the terminal device by using the source network device. In other words, the third end marker packet and the second end marker packet may be a same data packet. For a specific implementation of the second end marker packet, refer to the foregoing description. Details are not described herein again.

Optionally, the data packet on which the source network device has performed PDCP processing and for which no acknowledgment response from the terminal device is received may be a PDCP SDU, and the PDCP SDU does not include an SDAP header. In this way, after receiving the PDCP SDU, the target network device may further process the PDCP SDU by using a PDCP entity of the target network device, to generate a PDCP PDU. After being processed at an RLC layer, a MAC layer, and a PHY layer, the PDCP PDU is then sent to the terminal device through the air interface.

For the data packet on which the source network device does not perform PDCP processing, the source network device may directly send the data packet to the target network device, and the target network device performs PDCP processing on the data packet, to generate a PDCP PDU. After being processed at the RLC layer, the MAC layer, and the PHY layer, the PDCP PDU is then sent to the terminal device through the air interface. It should be noted that because the source network device does not allocate a corresponding PDCP sequence number to the data packet, the source network device does not send, to the target network device, the PDCP sequence number corresponding to the data packet either. Optionally, the data packet on which the source network device does not perform PDCP processing may be fresh data (namely, fresh data) received by the source network device from the core network. The fresh data does not include an SDAP header either.

It should be noted that, for the implementation shown in FIG. 6A and FIG. 6B, the source network device may alternatively send, to the target network device together with each data packet on which PDCP processing has been performed and for which no acknowledgment response from the terminal device is received, a PDCP sequence number corresponding to the data packet. Further, the target network device then sends, to the terminal device, the data packet and the PDCP sequence number corresponding to the data packet. In this way, the terminal device can determine, based on the PDCP sequence number corresponding to the data packet, whether the data packet includes an SDAP header.

The source network device may further send, to the target network device, a first PDCP number that can be allocated by the target network device, so that the target network device allocates corresponding PDCP sequence numbers to the data packet on which the source network device does not perform PDCP processing and the data packet that is of the terminal device and that is received by the target network device from the core network. In this way, the PDCP sequence number allocated by the target network device may extend or continue to use a PDCP sequence number allocated on the source network device side. Therefore, the terminal device can perform data packet in-sequence submission and deduplication processing, PDCP status report reporting, and the like in an inter-system handover process, to improve service continuity of the terminal device.

In addition, the source network device may further send, to the target network device through a downlink data forwarding tunnel corresponding to a DRB, the at least one data packet that is not successfully received by the terminal device, for example, a PDCP SDU for which no acknowledgment response from the terminal device is received or fresh data (fresh data) that is received from the core network and that is mapped to the DRB. In other words, the data forwarding tunnel between the source network device and the target network device may be at a DRB granularity. To be specific, each DRB on which data forwarding needs to be performed may have a dedicated downlink data forwarding tunnel.

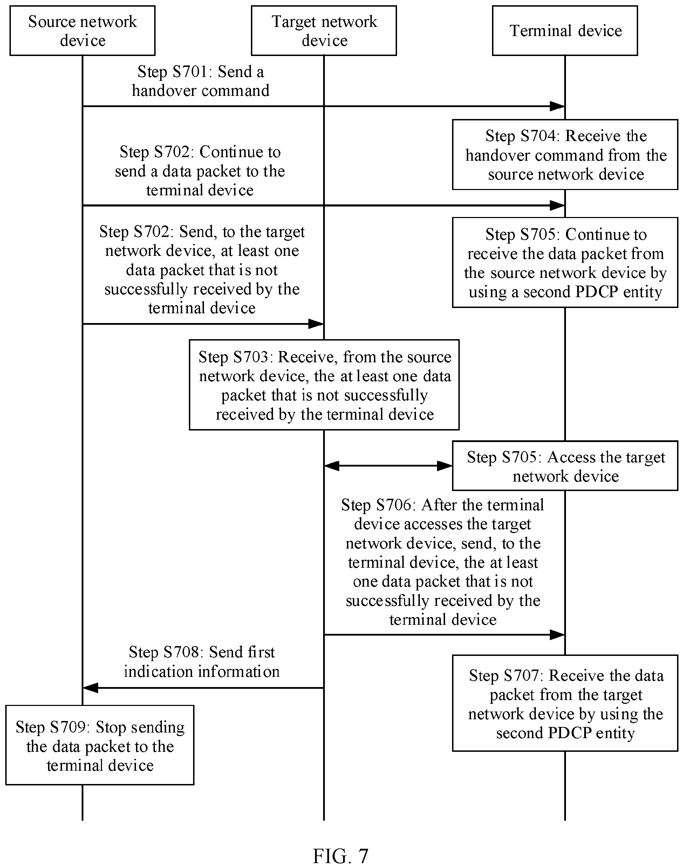

FIG. 7 is a schematic flowchart of another handover method according to an embodiment of this application. The method specifically includes the following steps.

Step S701: A source network device sends a handover command to a terminal device, where the handover command indicates to hand over the terminal device from the source network device to a target network device. Optionally, the handover command includes a non-interrupt indication.

In this embodiment of this application, before the source network device sends the handover command to the terminal device, the terminal device may access the source network device, and perform data transmission with the source network device.

The handover command may be a handover command message or handover command signaling. This is not limited.

Step S702: The source network device continues to send a data packet to the terminal device, and the source network device sends at least one data packet of the terminal device to the target network device, where the at least one data packet of the terminal device is a data packet on which the source network device has performed PDCP processing. Optionally, the data packet on which the source network device has performed PDCP processing may be a PDCP SDU.

In this embodiment of this application, the source network device may continue to send the data packet to the terminal device by using a first PDCP entity in the source network device, and the source network device may further send, to the target network device, the at least one data packet that is of the terminal device and that is processed by the first PDCP entity. In other words, the source network device may send the data packets to the terminal device and the target network device by using a same PDCP entity.

It should be noted that a sequence of performing steps S701 and S702 is not limited in this embodiment of this application. To be specific, S701 may be performed before S702, or S702 may be performed before S701.

Step S703: The target network device receives the at least one data packet of the terminal device from the source network device.

In this embodiment of this application, the target network device may further receive the data packet of the terminal device from a core network.

Step S704: The terminal device receives the handover command from the source network device.

Step S705: The terminal device continues to receive the data packet from the source network device by using a second PDCP entity, and accesses the target network device.

Step S706: After the terminal device accesses the target network device, the target network device sends, to the terminal device, the at least one data packet that is of the terminal device and that is received from the source network device.

Step S707: The terminal device receives the at least one data packet from the target network device by using the second PDCP entity.

In this embodiment of this application, after receiving the non-interruption indication of the handover command, the terminal device may continue to receive the data packet from the source network device by using the second PDCP entity in the terminal device. After the terminal device accesses the target network device, the terminal device may further receive the at least one data packet from a target network by using the second PDCP entity. To be specific, in an inter-system handover process, the terminal device may receive the data packets from the source network device and the target network device by using a same PDCP entity.

Step S708: The target network device sends first indication information to the source network device, where the first indication information indicates that the terminal device has successfully accessed the target network device.

Optionally, the target network device may further send second indication information to the terminal device, where the second indication information indicates the terminal device to stop receiving the data packet from the source network device.

Step S709: After receiving the first indication information indicating that the terminal device has successfully accessed the target network device, the source network device stops sending the data packet to the terminal device.

In this embodiment of this application, the source network device may further send an end marker packet to the target network device, and the end marker packet indicates that sending of the at least one data packet that is of the terminal device and that is forwarded to the target network device has been completed. The end marker packet may be a data packet that is received by the source network device from the core network and that indicates the core network to stop sending data to the terminal device by using the source network device. In this way, after receiving the end marker packet, the target network device may send, to the terminal device, the data packet received by the target network device from the core network. Optionally, the target network device may further send the end marker packet to the terminal device, to indicate that sending of the data packet that is of the terminal device and that is received from the source network device has been completed. For a specific implementation of the end marker packet, refer to the second end marker packet in Embodiment 1. Details are not described herein again.

According to the foregoing technical solution, after receiving the handover command sent by the source network device, the terminal device does not immediately disconnect from the source network device. On the contrary, the terminal device may continue to receive the data packet from the source network device, initiate a random access process, and access the target network device. After successfully accessing the target network device, the terminal device may disconnect from the source network device. Correspondingly, after determining that the terminal device successfully accesses the target network device, the source network device may stop sending the data packet to the terminal device. In this way, the terminal device and the network device are not disconnected in the inter-system handover process, thereby improving service continuity of the terminal device and improving user experience.

In an application scenario, the source network device may be a network device in a communication system using a first communication standard. In the communication system using the first communication standard, air interface protocol stacks of the network device and the terminal device each include SDAP layer processing. The target network device may be a network device in a communication system using a second communication standard. In the communication system using the second communication standard, none of air interface protocol stacks of the network device and the terminal device includes SDAP layer processing. For example, the source network device may be an access network device in a 5G communication system, and the target network device may be an access network device in a 4G communication system.

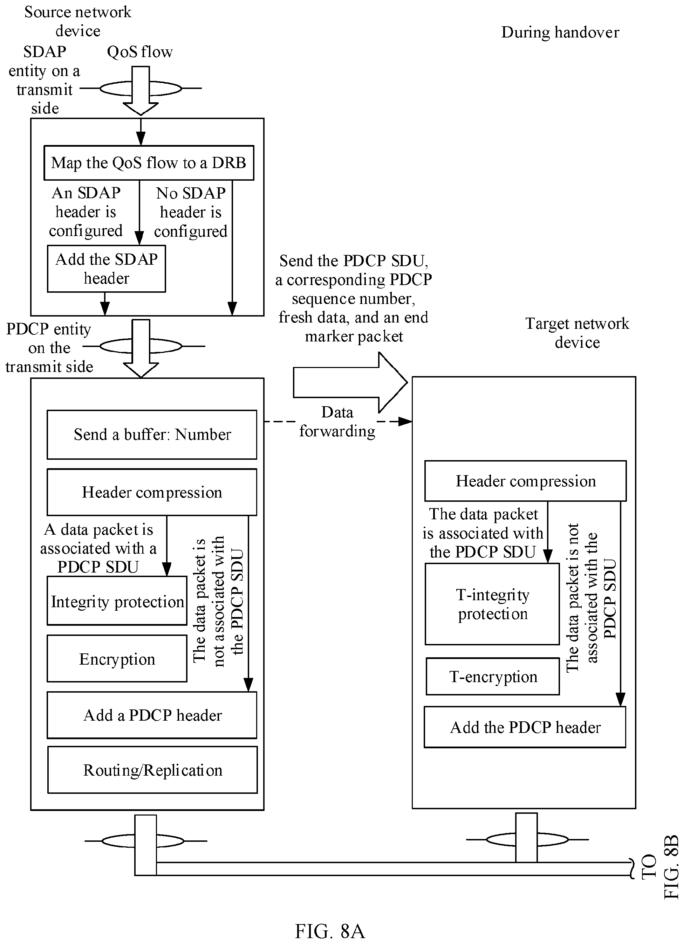

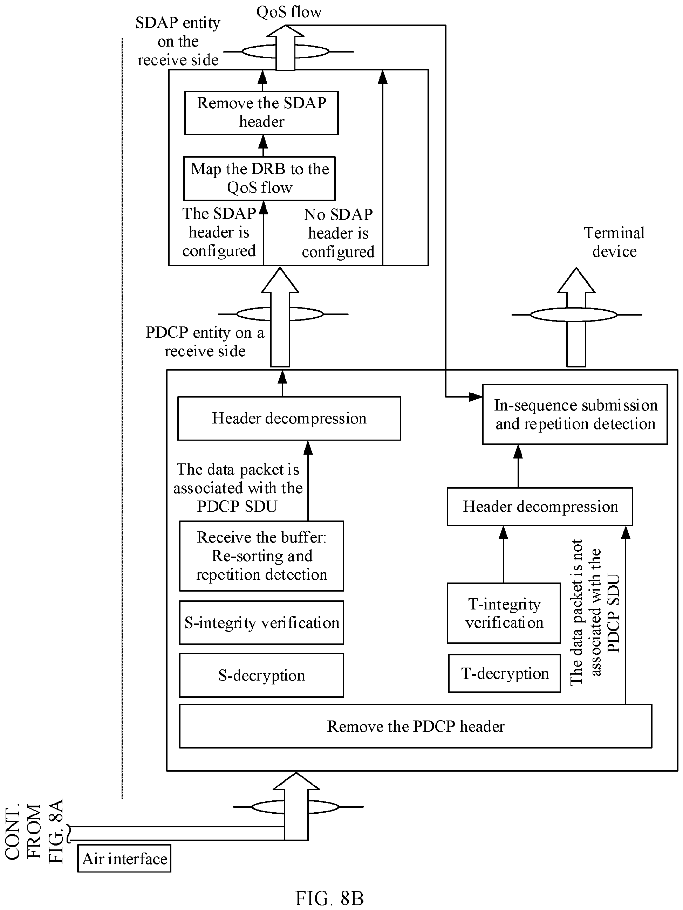

To avoid a problem that the terminal device cannot correctly receive and decode data because the source network device and the target network device perform inconsistent processing on the data, in a first possible implementation, as shown in FIG. 8A and FIG. 8B, on one hand, the source network device may continue to send a data packet to the terminal device, where the data packet sent by the source network device to the terminal device includes an SDAP header added before PDCP processing; on the other hand, the source network device may remove an SDAP header from the at least one data packet of the terminal device, and then send, to the target network device, the data packet from which the SDAP header is removed. The at least one data packet of the terminal device is a data packet on which the source network device has performed PDCP processing. Optionally, the at least one data packet may be a PDCP SDU.

The target network device may receive the at least one data packet of the terminal device from the source network device, and after the terminal device accesses the target network device, send, to the terminal device, the at least one data packet that is of the terminal device and that is received from the source network device. Optionally, the target network device may further receive the data packet of the terminal device from the core network, and send, to the terminal device, the data packet received from the core network. It may be understood that, because the protocol stack of the target network device does not include SDAP layer processing, and the SDAP header added before PDCP processing is performed is removed from the data packet received by the target network device from the source network device, in this scenario, none of the data packet sent by the target network device to the terminal device includes an SDAP header.

Further, the terminal device may receive the data packets from the source network device and the target network device, and process, by using a same PDCP entity (namely, the second PDCP entity), the data packet received from the source network device and the data packet received from the target network device. Optionally, after performing PDCP processing on the data packets, the second PDCP entity may further perform unified sorting and deduplication processing (namely, repetition detection) on the data packet received from the source network device and the data packet received from the target network device. In this way, data is submitted in sequence without repetition in the inter-system handover process.

Specifically, the second PDCP entity in the terminal device may separately process, based on different air interfaces for receiving data, the data packet received from the source network device and the data packet received from the target network device. For the data packet received from the source network device, the terminal device may send the data packet to the second PDCP entity for PDCP processing, and the second PDCP entity may send, to an SDAP entity in the terminal device, the data packet on which PDCP processing is performed, to remove the SDAP header. Optionally, the SDAP entity may send, back to the second PDCP entity for deduplication processing, the data packet from which the SDAP header is removed, and finally the second PDCP entity may submit, to an upper layer in sequence, the data packet on which deduplication processing is performed.

For the data packet received from the target network device, the terminal device may send the data packet to the second PDCP entity for PDCP processing. Because the SDAP header does not need to be removed, the second PDCP entity may perform re-sorting and deduplication processing on the one or more data packets on which PDCP processing is performed, and then submit, to the upper layer in sequence, the one or more data packets on which deduplication processing is performed.

Optionally, the second PDCP entity is of a dual active protocol stack (dual active protocol stack, DAPS) structure. The second PDCP entity includes two processing units, and the processing units respectively correspond to a security configuration of the source network device and a security configuration of the target network device. A first processing unit corresponds to the security configuration of the source network device, and it may also be understood that the first processing unit has a function of a PDCP layer matching the source network device. A second processing unit corresponds to the security configuration of the target network device, and it may also be understood that the second processing unit has a function of a PDCP layer that matches the target network device. In this way, the second PDCP entity may perform, by using the first processing unit, PDCP processing on the data packet received from the source network device, and perform, by using the second processing unit, PDCP processing on the data packet received from the target network device.

It should be noted that both the first processing unit and the second processing unit that are mentioned in this embodiment of this application may include one or more modules, for example, modules having functions such as decryption, integrity verification, sorting, and header compression. In addition, functions of the first processing unit and the second processing unit may be the same or different. In other words, the source network device and the target network device may be implemented by using a same PDCP entity or different PDCP entities. This is not limited in this application.

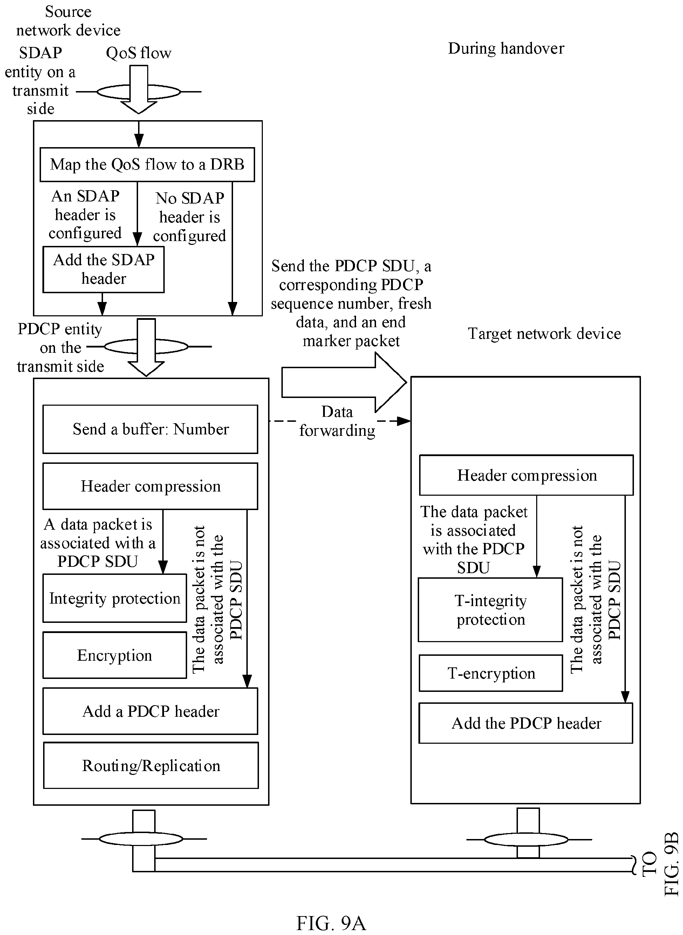

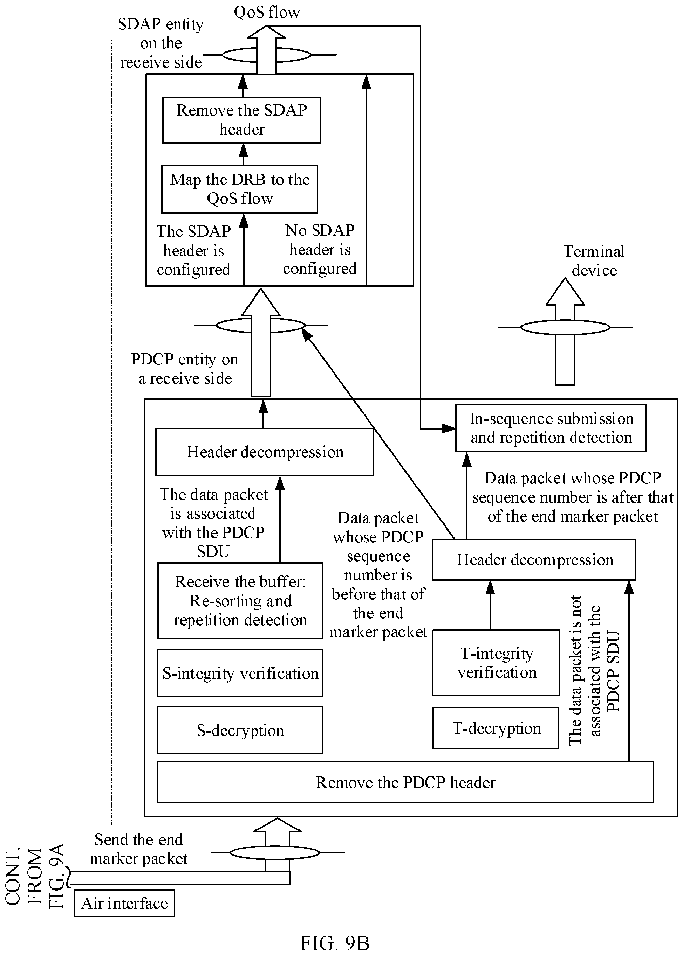

In a second possible implementation, as shown in FIG. 9A and FIG. 9B, before sending the at least one data packet of the terminal device to the target network device, the source network device may not remove an SDAP header of the data packet. Instead, the terminal device independently identifies a data packet including an SDAP header and a data packet not including an SDAP header that are received from the target network device, and further separately processes the received data packet including the SDAP header and the received data packet not including the SDAP header.

Specifically, on one hand, the source network device may continue to send a data packet to the terminal device; on the other hand, the source network device may send the at least one data packet of the terminal device to the target network device. The at least one data packet may be a data packet on which the source network device has performed PDCP processing, for example, a PDCP PDU. However, it should be noted that both the data packet sent by the source network device to the terminal device and the data packet sent by the source network device to the target network device include an SDAP header added before PDCP processing is performed.

The target network device may receive the at least one data packet of the terminal device from the source network device, and after the terminal device accesses the target network device, send, to the terminal device, the at least one data packet that is of the terminal device and that is received from the source network device, where the at least one data packet includes an SDAP header. Optionally, the target network device may further receive the data packet of the terminal device from the core network, and send, to the terminal device, the data packet received from the core network. It may be understood that, because the protocol stack of the target network device does not include SDAP layer processing, and the SDAP header added before the PDCP processing is performed is not removed when the source network device sends, to the target network device, the data packet on which PDCP processing has been performed, the data packet that is received from the core network and that is sent by the target network device to the terminal device does not include an SDAP header, and the data packet that is received from the source network device and that is sent by the target network device to the terminal device includes an SDAP header.

To help the terminal device identify the data packet including the SDAP header and/or the data packet not including the SDAP header that are/is received from the target network device, the target network device may send an end marker packet to the terminal device, where the end marker packet indicates that sending of the data packet received from the source network device has been completed, or it may be understood that sending of the data packet including the SDAP header has been completed. Optionally, the target network device may send the end marker packet after sending, to the terminal device, the at least one data packet received from the source network device and before sending, to the terminal device, the data packet received from the core network. Alternatively, the end marker packet may be a data packet that is received by the target network device from the source network device and that indicates that sending of the at least one data packet that is of the terminal device and that is forwarded to the target network device has been completed. To be specific, after receiving the end marker packet from the source network device, the target network device may forward the end marker packet to the terminal device. Then, the target network device may send, to the terminal device, the data packet received from the core network.

Similarly, the terminal device may receive the data packets from the source network device and the target network device, and process, by using a same PDCP entity, the data packet received from the source network device and the data packet received from the target network device. The terminal device may further receive the end marker packet from the target network device.

Specifically, the second PDCP entity in the terminal device may separately process, based on different air interfaces for receiving data, the data packet received from the source network device and the data packet received from the target network device. For the data packet received from the source network device, the terminal device may send the data packet to the second PDCP entity for PDCP processing, and the second PDCP entity may send, to an SDAP entity in the terminal device, the data packet on which PDCP processing is performed, to remove the SDAP header. The SDAP entity may send, back to the second PDCP entity for deduplication processing, the data packet from which the SDAP header is removed, and finally the second PDCP entity may submit, to an upper layer in sequence, the data packet on which deduplication processing is performed.

For the data packet received from the target network device, the terminal device may identify, based on the end marker packet received from the target network device, the data packet including the SDAP header and/or the data packet not including the SDAP header in the data packet received from the target network device, and separately process the data packet including the SDAP header and the data packet not including the SDAP header. To be specific, after PDCP processing is performed on the data packet including the SDAP header, the SDAP entity further needs to remove the SDAP header before submitting the data packet to the upper layer, and after PDCP processing is performed on the data packet not including the SDAP header, the SDAP header does not need to be removed.

For example, the terminal device may consider that a data packet that is received from the target network device and whose PDCP sequence number is less than a PDCP sequence number of the end marker packet is a data packet including an SDAP header, and a data packet that is received from the target network device and whose PDCP sequence number is greater than the PDCP sequence number of the end marker packet is a data packet not including an SDAP header. In this way, the terminal device may send, to the second PDCP entity for PDCP processing, the data packet that is received from the target network device and whose PDCP sequence number is less than the PDCP sequence number of the end marker packet, then send the data packet to the SDAP header to remove the SDAP header, finally return the one or more data packets to the second PDCP entity to perform re-sorting and deduplication processing, and submit the one or more data packets to the upper layer in sequence. Correspondingly, after sending, to the second PDCP entity for PDCP processing, the data packet that is received from the target network device and whose PDCP sequence number is greater than the PDCP sequence number of the end marker packet, the terminal device may directly enter a re-sorting and deduplication processing procedure, and then submit the data packet to the upper layer in sequence, without sending the data packet to the SDAP entity to remove the SDAP header.

Optionally, the second PDCP entity may also be of a DAPS structure. For a specific implementation of the second PDCP entity, refer to the description in the first implementation in this scenario. Details are not described herein again.

It should be noted that, for the foregoing two possible implementations in this scenario, the source network device may further send, to the target network device together with each data packet on which PDCP processing has been performed, a PDCP sequence number corresponding to the data packet. In addition, the source network device may further send, to the target network device, a first PDCP sequence number allocated by the target network device, so that the target network device allocates a PDCP sequence number to the data packet received from the core network, and PDCP sequence numbers on a source side and a target side in the inter-system handover process can continue to be used.

The source network device may send, the at least one data packet of the terminal device to the target network device through a downlink data forwarding tunnel corresponding to a DRB, for example, a PDCP SDU on which PDCP processing has been performed or fresh data that is newly received from the core network and that is mapped to the DRB. In other words, the data forwarding tunnel between the source network device and the target network device may be at a DRB granularity. To be specific, each DRB on which data forwarding needs to be performed may have a dedicated downlink data forwarding tunnel.

In another application scenario, the source network device may be a network device in a communication system using a second communication standard. In the communication system using the second communication standard, none of air interface protocol stacks between the network device and the terminal device includes SDAP layer processing. The target network device may be a network device in a communication system using a first communication standard. In the communication system using the first communication standard, air interface protocol stacks between the network device and the terminal device each include SDAP layer processing. For example, the source network device may be an access network device in a 4G communication system, and the target network device may be an access network device in a 5G communication system.

In this scenario, on one hand, the source network device may continue to send a data packet to the terminal device; on the other hand, the source network device may send the at least one data packet of the terminal device to the target network device. The at least one data packet may be a data packet on which the source network device has performed PDCP processing, for example, a PDCP SDU. However, it should be noted that because the protocol stack of the source network device does not include SDAP layer processing, neither the data packet sent by the source network device to the terminal device nor the data packet sent by the source network device to the target network device includes an SDAP header.

Similar to Embodiment 1, in a first possible implementation, the target network device may receive the at least one data packet of the terminal device from the source network device. The at least one data packet is first processed by using an SDAP entity, and is sent to a PDCP entity for PDCP processing after being added with an SDAP header. Then, after the data packet is processed at an RLC layer, a MAC layer, and a PHY layer, the target network device may send, to the terminal device through an air interface, the data packet to which the SDAP header is added. The target network device may further receive the data packet of the terminal device from the core network, and send the data packet to the terminal device after the data packet is processed by the SDAP entity and the PDCP entity and processed at the RLC layer, the MAC layer, the PHY layer, and the like. It can be learned that in this implementation, each data packet sent by the target network device to the terminal device includes an SDAP header.

Further, the terminal device may receive the data packets from the source network device and the target network device, and process, by using a same PDCP entity (namely, the second PDCP entity), the data packet received from the source network device and the data packet received from the target network device. Optionally, after performing PDCP processing on the data packets, the second PDCP entity may further perform unified sorting and deduplication processing on the data packet received from the source network device and the data packet received from the target network device.

Specifically, the terminal device may separately process, based on different air interfaces for receiving, the data packet received from the source network device and the data packet received from the target network device. For the data packet received from the source network device, the terminal device may send the data packet to the second PDCP entity for PDCP processing, and then submit the data packet to an upper layer. Optionally, after re-sorting and deduplication processing are performed on the data packets on which PDCP processing is performed, the data packets may be submitted to the upper layer in sequence.

For the data packet received from the target network device, the terminal device may send the data packet to the second PDCP entity for PDCP processing, and then submit the data packet to the upper layer after sending the data packet to the SDAP entity to remove the SDAP header. Optionally, after re-sorting and deduplication processing are performed on the one or more data packets from which the one or more SDAP headers are removed, the one or more data packets may be submitted to the upper layer in sequence.

In this way, after accessing the target network device, the terminal device can correctly receive and decode the data packet received from the source network device and the data packet received from the target network device.

In a second possible implementation, the target network device may receive the at least one data packet of the terminal device from the source network device, and send the at least one data packet to the terminal device through an air interface after PDCP processing and processing at an RLC layer, a MAC layer, a PHY layer, and the like are performed on the at least one data packet. The target network device may further receive the data packet of the terminal device from the core network, and send the data packet to the terminal device after the data packet is processed by the SDAP entity and the PDCP entity and processed at the RLC layer, the MAC layer, and the PHY layer. It should be noted that the target network device does not add an SDAP header to the data packet received from the source network device before sending the data packet to the terminal device. Therefore, herein, the data packet that is sent by the target network device to the terminal device and that is received from the source network device does not include an SDAP header, and the data packet that is sent by the target network device to the terminal device and that is received from the core network includes an SDAP header.

To enable the terminal device to identify the data packet including the SDAP header and/or the data packet not including the SDAP header that are/is received from the target network device, the target network device may further send an end marker packet to the terminal device, where the end marker packet indicates that sending of the data packet received from the source network device has been completed, or it may be understood that sending of the data packet not including the SDAP header has been completed. Optionally, the target network device may send the end marker packet after sending, to the terminal device, the at least one data packet received from the source network device and before sending, to the terminal device, the data packet received from the core network. Optionally, the end marker packet may be a data packet that is received by the target network device from the source network device and that indicates that sending of the at least one data packet that is of the terminal device and that is forwarded to the target network device has been completed. To be specific, after receiving the end marker packet from the source network device, the target network device may forward the end marker packet to the terminal device. Then, the target network device may send, to the terminal device, the data packet received from the core network.

Further, the terminal device may receive the data packets from the source network device and the target network device, and process, by using a same PDCP entity, the data packet received from the source network device and the data packet received from the target network device. The terminal device may further receive the end marker packet from the target network device.

Specifically, the second PDCP entity in the terminal device may separately process, based on different air interfaces for receiving data, the data packet received from the source network device and the data packet received from the target network device. For the data packet received from the source network device, the terminal device may send the data packet to the second PDCP entity for PDCP processing. Because the SDAP header does not need to be removed, after PDCP processing is performed, the second PDCP entity may continue to perform re-sorting and deduplication processing on the one or more data packets, and then submit, to an upper layer in sequence, the one or more data packets on which deduplication processing is performed.

For the data packet received from the target network device, the terminal device may identify, based on the end marker packet received from the target network device, the data packet including the SDAP header and/or the data packet not including the SDAP header in the data packet received from the target network device, and separately process the data packet including the SDAP header and the data packet not including the SDAP header. To be specific, after PDCP processing is performed on the data packet including the SDAP header, the SDAP entity further needs to remove the SDAP header before submitting the data packet to the upper layer, and after PDCP processing is performed on the data packet not including the SDAP header, the SDAP header does not need to be removed.

For example, the terminal device may consider that a data packet that is received from the target network device and whose PDCP sequence number is less than a PDCP sequence number of the end marker packet is a data packet not including an SDAP header, and a data packet that is received from the target network device and whose PDCP sequence number is greater than the PDCP sequence number of the end marker packet is a data packet including an SDAP header. In this way, the terminal device may send, to the second PDCP entity for PDCP processing, the data packet that is received from the target network device and whose PDCP sequence number is less than the PDCP sequence number of the end marker packet, then enter a re-sorting and deduplication processing procedure, and then submit the data packet to the upper layer in sequence, without sending the data packet the SDAP entity to remove the SDAP header. Correspondingly, the terminal device may send, to the second PDCP entity for PDCP processing, the data packet that is received from the target network device and whose PDCP sequence number is greater than the PDCP sequence number of the end marker packet, then send the data packet to the SDAP header to remove the SDAP header, finally return the one or more data packets to the second PDCP entity to perform re-sorting and deduplication processing, and submit the one or more data packets to the upper layer in sequence.

It should be noted that, for the two possible implementations in this scenario, the second PDCP entity in the terminal device may also be of a DAPS structure. To be specific, the second PDCP entity includes a first processing unit and a second processing unit, the first processing unit corresponds to a security configuration of the source network device, and the second processing network element corresponds to a security configuration of the target network device. The second PDCP entity performs, by using the first processing unit, PDCP processing on the data packet received from the source network device, and performs, by using the second processing unit, PDCP processing on the data packet received from the target network device. For specific implementations of the first processing unit and the second processing unit, refer to the foregoing description. Details are not described herein again.

The source network device may further send, to the target network device together with each data packet on which PDCP processing has been performed, a PDCP sequence number corresponding to the data packet. In addition, the source network device may further send, to the target network device, a first PDCP sequence number allocated by the target network device, so that the target network device allocates a PDCP sequence number to the data packet received from the core network, and PDCP sequence numbers on a source side and a target side in the inter-system handover process can continue to be used.

In addition, the source network device may send, the at least one data packet of the terminal device to the target network device through a downlink data forwarding tunnel corresponding to a DRB, for example, a PDCP SDU on which PDCP processing has been performed or fresh data that is newly received from the core network and that is mapped to the DRB. In other words, the data forwarding tunnel between the source network device and the target network device may be at a DRB granularity. To be specific, each DRB on which data forwarding needs to be performed may have a dedicated downlink data forwarding tunnel.

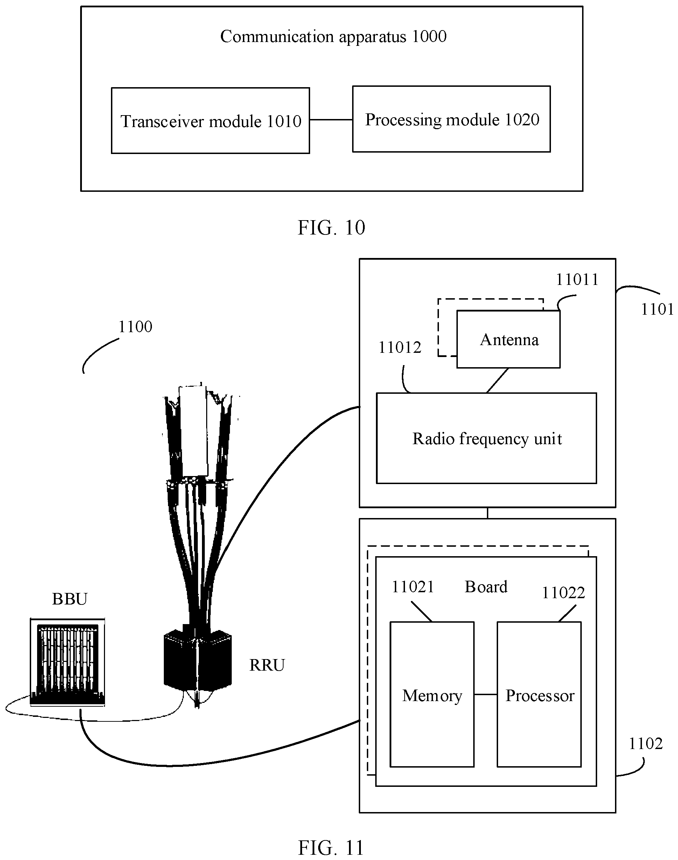

An embodiment of this application provides a communication apparatus. FIG. 10 is a schematic diagram of a structure of a communication apparatus according to an embodiment of this application. The communication apparatus 1000 includes a transceiver module 1010 and a processing module 1020. The communication apparatus may be configured to implement a function of the source network device or the target network device in any one of the foregoing method embodiments. For example, the communication apparatus may be a network device or a chip included in the network device.

When the communication apparatus is used as a source network device to perform the method embodiment shown in FIG. 2, the transceiver module 1010 is configured to send a handover command to a terminal device, where the handover command indicates to hand over the terminal device from the communication apparatus to a target network device, and the communication apparatus and the target network device use different radio access technologies. The transceiver module 1010 is further configured to send, to the target network device, at least one data packet that is not successfully received by the terminal device, where the at least one data packet that is not successfully received by the terminal device includes one or both of the following data packets: a data packet on which packet data convergence protocol PDCP processing has been performed and for which no acknowledgment response from the terminal device is received, and a data packet on which PDCP processing is not performed.

In a possible design, when the at least one data packet that is not successfully received by the terminal device includes the data packet on which PDCP processing has been performed and for which no acknowledgment response from the terminal device is received, the processing module 1020 is configured to: remove a service data adaptation protocol SDAP header from the data packet, and then send, to the target network device by using the transceiver module 1010, the data packet from which the SDAP header is removed.

In a possible design, when the at least one data packet that is not successfully received by the terminal device includes the data packet on which PDCP processing is not performed, the processing module 1020 is configured to: map the data packet to a corresponding DRB, and then send, to the target network device by using the transceiver module 1010, the data packet mapped to the corresponding DRB, where the data packet does not include an SDAP header.

In a possible design, when the at least one data packet that is not successfully received by the terminal device includes the data packet on which PDCP processing has been performed and for which no acknowledgment response from the terminal device is received, the transceiver module 1010 is configured to send the data packet to the target network device, where the data packet includes an SDAP header.

In a possible design, the transceiver module 1010 is further configured to send, to the target network device, a PDCP sequence number corresponding to the data packet on which PDCP processing has been performed and for which no acknowledgment response from the terminal device is received; and/or the transceiver module 1010 is further configured to send, to the target network device, a first PDCP sequence number that can be allocated by the target network device.

When the communication apparatus is used as a target network device to perform the method embodiment shown in FIG. 2, the transceiver module 1010 is configured to receive, from a source network device, at least one data packet that is not successfully received by a terminal device, where the at least one data packet that is not successfully received by the terminal device includes one or both of the following data packets: a data packet on which the source network device has performed packet data convergence protocol PDCP processing and for which no acknowledgment response from the terminal device is received, and a data packet on which the source network device does not perform PDCP processing, and the source network device and the communication apparatus use different radio access technologies. A handover command indicates to hand over the terminal device from the source network device to the communication apparatus. The processing module 1020 is configured to: after the terminal device accesses the communication apparatus, send, to the terminal device by using the transceiver module 1010, the at least one data packet that is not successfully received by the terminal device.

In a possible design, the data packet, received by the communication apparatus from the source network device, on which the source network device has performed PDCP processing and for which no acknowledgment response from the terminal device is received does not include a service data adaptation protocol SDAP header.

In a possible design, the data packet, received by the communication apparatus from the source network device, on which the source network device has performed PDCP processing and for which no acknowledgment response from the terminal device is received includes an SDAP header. The transceiver module 1010 is further configured to send an end marker packet to the terminal device, where the end marker packet indicates that sending of the data packet including the SDAP header is completed.

In a possible design, the transceiver module 1010 is further configured to receive, from the source network device, a PDCP sequence number corresponding to the data packet on which the source network device has performed PDCP processing and for which no acknowledgment response from the terminal device is received; and/or the transceiver module 1010 receives, from the source network device, a first PDCP sequence number that can be allocated by the communication apparatus.

The processing module 1020 in the communication apparatus may be implemented by a processor or a processor-related circuit component, and the transceiver module 1010 may be implemented by a transceiver or a transceiver-related circuit component. Operations and/or functions of the modules in the communication apparatus are respectively used to implement the corresponding procedure of the method shown in FIG. 2 or FIG. 7. For brevity, details are not described herein again.

FIG. 11 is a schematic diagram of another structure of a communication apparatus according to an embodiment of this application. The communication apparatus 1100 may be specifically a network device, for example, a base station, configured to implement a function of the source network device or the target network device in any one of the foregoing method embodiments.

The network device includes one or more radio frequency units, for example, a remote radio unit (remote radio unit, RRU) 1101 and one or more baseband units (baseband units, BBUs) (which may also be referred to as digital units, digital units, DUs) 1102. The RRU 1101 may be referred to as a transceiver unit, a transceiver machine, a transceiver circuit, a transceiver, or the like, and may include at least one antenna 11011 and a radio frequency unit 11012. The RRU 1101 is mainly configured to receive and send a radio frequency signal and convert the radio frequency signal and a baseband signal. The BBU 1102 is mainly configured to perform baseband processing, control the base station, and the like. The RRU 1101 and the BBU 1102 may be physically disposed together, or may be physically disposed separately, namely, a distributed base station.

The BBU 11202 is a control center of the base station, may also be referred to as a processing unit, and is mainly configured to complete baseband processing functions such as channel coding, multiplexing, modulation, and spectrum spreading. For example, the BBU (the processing unit) 1102 may be configured to control the base station to execute an operation procedure related to the source network device or the target network device in the foregoing method embodiments.

In an example, the BBU 1102 may include one or more boards, and a plurality of boards may jointly support a radio access network (for example, an LTE network) using a single access standard, or may separately support radio access networks (for example, an LTE network, a 5G network, or another network) using different access standards. The BBU 1102 may further include a memory 11021 and a processor 11022, and the memory 11021 is configured to store necessary instructions and necessary data. The processor 11022 is configured to control the base station to perform a necessary action, for example, is configured to control the base station to perform a sending operation in the foregoing method embodiments. The memory 11021 and the processor 11022 may serve one or more boards. In other words, the memory and processor can be separately disposed on each board. Alternatively, a plurality of boards may share a same memory and a same processor. In addition, a necessary circuit may be further disposed on each board.

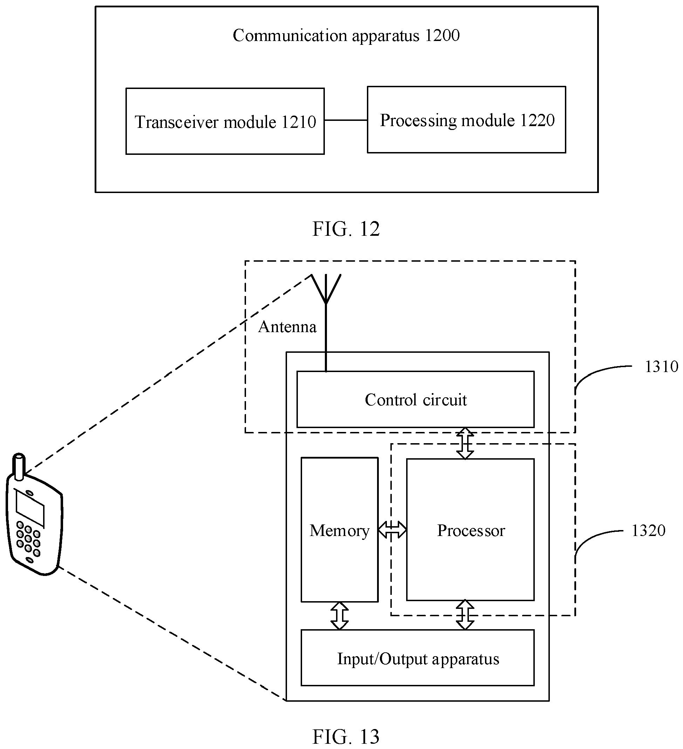

An embodiment of this application provides another communication apparatus. FIG. 12 is a schematic diagram of a structure of another communication apparatus according to an embodiment of this application. The communication apparatus 1200 includes a transceiver module 1210 and a processing module 1220. The communication apparatus may be configured to implement a function of the terminal device in any one of the foregoing method embodiments. For example, the communication apparatus may be a terminal device, for example, a handheld terminal device or a vehicle-mounted terminal device. Alternatively, the communication apparatus may be a chip included in a terminal device, or an apparatus including the terminal device, for example, various types of vehicles.

When the communication apparatus is used as a terminal device to perform the method embodiment shown in FIG. 2, the transceiver module 1210 is configured to receive a handover command from a source network device, where the handover command indicates to hand over the communication apparatus from the source network device to a target network device, and the source network device and the target network device use different radio access technologies. The processing module 1220 is configured to: access the target network device, and receive an end marker packet from the target network device by using the transceiver module 1210. The processing module 1220 is further configured to identify, based on the end marker packet, a data packet including a service data adaptation protocol SDAP header and/or a data packet not including the SDAP header in a data packet received from the target network device.

In a possible design, the processing module 1220 is specifically configured to identify, based on a packet data convergence protocol PDCP sequence number corresponding to the end marker packet, the data packet including the SDAP header and/or the data packet not including the SDAP header in the data packet received from the target network device.

In a possible design, when the processing module 1220 identifies that the data packet received from the target network device includes an SDAP header, the processing module is further configured to: perform PDCP processing on the data packet by using a PDCP entity, and then sends the data packet to an SDAP entity. The SDAP entity removes the SDAP header from the data packet. When the processing module 1220 identifies the data packet not including the SDAP header in the data packet received from the target network device, the processing module is further configured to perform PDCP processing on the data packet by using the PDCP entity. However, after PDCP processing is performed on the data packet, the data packet is no longer sent to the SDAP entity, to remove the SDAP header.

In a possible design, the processing module 1220 is further configured to send, to an upper layer by using the SDAP entity, the data packet from which the SDAP header is removed; or the processing module 1220 is further configured to: receive, by using the PDCP entity from the SDAP entity, the data packet from which the SDAP header is removed, and after sorting the one or more data packets based on one or more PDCP sequence numbers of the one or more data packets, send the one or more data packets to an upper layer in sequence.

It should be understood that the processing module 1220 in the communication apparatus may be implemented by a processor or a processor-related circuit component, and the transceiver module 1210 may be implemented by a transceiver or a transceiver-related circuit component. Operations and/or functions of the modules in the communication apparatus are respectively used to implement the corresponding procedure of the method shown in FIG. 2 or FIG. 7. For brevity, details are not described herein again.

FIG. 13 is a schematic diagram of another structure of a communication apparatus according to an embodiment of this application. The communication apparatus may be specifically a terminal device. For ease of understanding and illustration, in FIG. 13, a mobile phone is used as an example of the terminal device. As shown in FIG. 13, the terminal device includes a processor, and may further include a memory. In addition, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store a software program and data. The radio frequency circuit is mainly configured to: convert a baseband signal and a radio frequency signal, and process the radio frequency signal. The antenna panel is mainly configured to transmit and receive a radio frequency signal in an electromagnetic wave form. The input/output apparatus, such as a touchscreen, a display screen, or a keyboard, is mainly configured to receive data input by a user and output data to the user. It should be noted that some types of terminal devices may have no input/output apparatus.

When data needs to be sent, the processor performs baseband processing on to-be-sent data, and then outputs a baseband signal to a radio frequency circuit. After performing radio frequency processing on the baseband signal, the radio frequency circuit sends a radio frequency signal to the outside by using the antenna in an electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 13, the terminal device includes a transceiver unit 1310 and a processing unit 1320. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1310 and that is configured to implement a receiving function may be considered as a receiving unit, and a component that is in the transceiver unit 1310 and that is configured to implement a sending function may be considered as a sending unit. That is, the transceiver unit 1310 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like. It should be understood that the transceiver unit 1310 is configured to perform a sending operation and a receiving operation on the terminal device side in the foregoing method embodiments, and the processing unit 1320 is configured to perform an operation other than the receiving/sending operation of the terminal device in the foregoing method embodiments.

An embodiment of this application further provides a chip system, including a processor, where the processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by the hardware, the processor may be a logic circuit, an integrated circuit, or the like. When the processor is implemented by the software, the processor may be a general-purpose processor, and is implemented by reading software codes stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

It should be understood that steps in the foregoing method embodiments may be completed by using a logic circuit in the form of hardware or instructions in the form of software in the processor. The steps of the methods according to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a source network device, a target network device, and at least one terminal device described in the foregoing method embodiments. Optionally, the communication system may further include a core network device.

It should be understood that, the processor mentioned in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory mentioned in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of the present invention.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A handover method, wherein the method comprises:
sending, by a source network device, a handover command to a terminal device, wherein the handover command indicates to hand over the terminal device from the source network device to a target network device, and the source network device and the target network device use different radio access technologies; and
sending, by the source network device to the target network device, at least one data packet that is not successfully received by the terminal device, wherein the at least one data packet that is not successfully received by the terminal device comprises one or both of the following data packets: a data packet on which packet data convergence protocol PDCP processing has been performed and for which no acknowledgment response from the terminal device is received, and a data packet on which PDCP processing is not performed.

2. The method according to claim 1, wherein that the source network device and the target network device use different radio access technologies comprises:
protocol stacks corresponding to the terminal device and the source network device each comprise service data adaptation protocol SDAP layer processing, and none of protocol stacks corresponding to the terminal device and the target network device comprises SDAP layer processing.

3. The method according to claim 1 or 2, wherein when the at least one data packet that is not successfully received by the terminal device comprises the data packet on which PDCP processing has been performed and for which no acknowledgment response from the terminal device is received, the method further comprises:
removing, by the source network device, an SDAP header from the data packet; and
the sending, by the source network device to the target network device, at least one data packet that is not successfully received by the terminal device comprises:
sending, by the source network device to the target network device, the data packet from which the SDAP header is removed.

4. The method according to any one of claims 1 to 3, wherein when the at least one data packet that is not successfully received by the terminal device comprises the data packet on which PDCP processing is not performed, the method further comprises:
mapping, by the source network device, the data packet to a corresponding data radio bearer DRB; and
the sending, by the source network device to the target network device, at least one data packet that is not successfully received by the terminal device comprises:
sending, by the source network device to the target network device, the data packet mapped to the corresponding DRB, wherein the data packet does not comprise an SDAP header.

5. The method according to claim 1 or 2, wherein when the at least one data packet that is not successfully received by the terminal device comprises the data packet on which PDCP processing has been performed and for which no acknowledgment response from the terminal device is received, the sending, by the source network device to the target network device, at least one data packet that is not successfully received by the terminal device comprises:
sending, by the source network device, the data packet to the target network device, wherein the data packet comprises an SDAP header.

6. The method according to any one of claims 1 to 5, wherein the method further comprises:
sending, by the source network device to the target network device, a PDCP sequence number corresponding to the data packet on which PDCP processing has been performed and for which no acknowledgment response from the terminal device is received; and/or
sending, by the source network device to the target network device, a first PDCP sequence number that can be allocated by the target network device.

7. A handover method, wherein the method comprises:
receiving, by a target network device from a source network device, at least one data packet that is not successfully received by a terminal device, wherein the at least one data packet that is not successfully received by the terminal device comprises one or both of the following data packets: a data packet on which the source network device has performed packet data convergence protocol PDCP processing and for which no acknowledgment response from the terminal device is received, and a data packet on which the source network device does not perform PDCP processing, and the source network device and the target network device use different radio access technologies; and
after the terminal device accesses the target network device, sending, by the target network device to the terminal device, the at least one data packet that is not successfully received by the terminal device.

8. The method according to claim 7, wherein that the source network device and the target network device use different radio access technologies comprises:
protocol stacks corresponding to the terminal device and the source network device each comprise service data adaptation protocol SDAP layer processing, and none of protocol stacks corresponding to the terminal device and the target network device comprises SDAP layer processing.

9. The method according to claim 7 or 8, wherein the data packet, received by the target network device from the source network device, on which the source network device has performed PDCP processing and for which no acknowledgment response from the terminal device is received does not comprise an SDAP header.

10. The method according to claim 7 or 8, wherein the data packet, received by the target network device from the source network device, on which the source network device has performed PDCP processing and for which no acknowledgment response from the terminal device is received comprises an SDAP header; and
the method further comprises:
sending, by the target network device, an end marker packet to the terminal device, wherein the end marker packet indicates that sending of the data packet comprising the SDAP header is completed.

11. The method according to any one of claims 7 to 10, wherein the method further comprises:
receiving, by the target network device from the source network device, a PDCP sequence number corresponding to the data packet on which the source network device has performed PDCP processing and for which no acknowledgment response from the terminal device is received; and/or
receiving, by the target network device from the source network device, a first PDCP sequence number that can be allocated by the target network device.

12. A handover method, wherein the method comprises:
receiving, by a terminal device, a handover command from a source network device, wherein the handover command indicates to hand over the terminal device from the source network device to a target network device, and the source network device and the target network device use different radio access technologies;
accessing, by the terminal device, the target network device, and receiving an end marker packet from the target network device; and
identifying, by the terminal device based on the end marker packet, a data packet comprising a service data adaptation protocol SDAP header and/or a data packet not comprising an SDAP header in a data packet received from the target network device.

13. The method according to claim 12, wherein that the source network device and the target network device use different radio access technologies comprises:
protocol stacks corresponding to the terminal device and the source network device each comprise SDAP layer processing, and none of protocol stacks corresponding to the terminal device and the target network device comprises SDAP layer processing.

14. The method according to claim 12 or 13, wherein the identifying, by the terminal device based on the end marker packet, a data packet comprising an SDAP header and/or a data packet not comprising an SDAP header in a data packet received from the target network device comprises:
identifying, by the terminal device based on a packet data convergence protocol PDCP sequence number corresponding to the first end marker packet, the data packet comprising the SDAP header and/or the data packet not comprising the SDAP header in the data packet received from the target network device.

15. The method according to any one of claims 12 to 14, wherein when the terminal device identifies that the data packet received from the target network device comprises an SDAP header, the method further comprises:
after performing PDCP processing on the data packet, sending, by a PDCP entity in the terminal device, the data packet to an SDAP entity in the terminal device, and removing, by the SDAP entity, the SDAP header from the data packet.

16. The method according to claim 15, wherein the method further comprises:
sending, by the SDAP entity to an upper layer, the data packet from which the SDAP header is removed; or
receiving, by the PDCP entity from the SDAP entity, the data packet from which the SDAP header is removed, and after sorting the one or more data packets based on one or more PDCP sequence numbers of the one or more data packets, sending the one or more data packets to an upper layer in sequence.

17. A handover method, wherein the method comprises:
sending, by a source network device, a handover command to a terminal device, wherein the handover command indicates to hand over the terminal device from the source network device to a target network device, and the source network device and the target network device use different radio access technologies;
continuing, by the source network device, to send a data packet to the terminal device, and sending, by the source network device, at least one data packet of the terminal device to the target network device, wherein the at least one data packet of the terminal device is a data packet on which the source network device has performed packet data convergence protocol PDCP processing; and
after receiving first indication information indicating that the terminal device has successfully accessed the target network device, stopping, by the source network device, sending the data packet to the terminal device.

18. The method according to claim 17, wherein that the source network device and the target network device use different radio access technologies comprises:
protocol stacks corresponding to the terminal device and the source network device each comprise service data adaptation protocol SDAP layer processing, and none of protocol stacks corresponding to the terminal device and the target network device comprises SDAP layer processing.

19. The method according to claim 17 or 18, wherein the method comprises:
continuing, by the source network device, to send the data packet to the terminal device by using a PDCP entity; and
sending, by the source network device to the target network device, the at least one data packet that is of the terminal device and that is processed by the PDCP entity.

20. The method according to any one of claims 17 to 19, wherein the method further comprises:
removing, by the source network device, an SDAP header from the at least one data packet of the terminal device; and
the sending, by the source network device, at least one data packet of the terminal device to the target network device comprises:
sending, by the source network device to the target network device, the at least one data packet from which the SDAP header is removed.

21. The method according to any one of claims 17 to 19, wherein the sending, by the source network device, at least one data packet of the terminal device to the target network device comprises:
sending, by the source network device, the at least one data packet of the terminal device to the target network device, wherein the data packet comprises an SDAP header.

22. The method according to any one of claims 17 to 21, wherein the method further comprises:
sending, by the source network device to the target network device, a PDCP sequence number corresponding to the data packet on which PDCP processing has been performed; and/or
sending, by the source network device to the target network device, a first PDCP sequence number that can be allocated by the target network device.

23. A handover method, wherein the method comprises:
receiving, by a target network device, at least one data packet of a terminal device from a source network device, wherein the source network device and the target network device use different radio access technologies;
after the terminal device accesses the target network device, sending, by the target network device, the at least one data packet to the terminal device, wherein the at least one data packet is a data packet on which the source network device has performed packet data convergence protocol PDCP processing; and
sending, by the target network device, first indication information to the source network device, wherein the first indication information indicates that the terminal device has successfully accessed the target network device.

24. The method according to claim 23, wherein that the source network device and the target network device use different radio access technologies comprises:
protocol stacks corresponding to the terminal device and the source network device each comprise service data adaptation protocol SDAP layer processing, and none of protocol stacks corresponding to the terminal device and the target network device comprises SDAP layer processing.

25. The method according to claim 23 or 24, wherein the method further comprises:
sending, by the target network device, second indication information to the terminal device, wherein the second indication information indicates the terminal device to stop receiving a data packet from the source network device.

26. The method according to any one of claims 23 to 25, wherein the data packet on which the source network device has performed PDCP processing does not comprise an SDAP header.

27. The method according to any one of claims 23 to 25, wherein the data packet on which the source network device has performed PDCP processing comprises an SDAP header; and
the method further comprises:
sending, by the target network device, an end marker packet to the terminal device, wherein the end marker packet indicates that sending of the data packet comprising the SDAP header is completed.

28. The method according to any one of claims 23 to 27, wherein the method further comprises:
receiving, by the target network device from the source network device, a PDCP sequence number corresponding to the data packet on which the source network device has performed PDCP processing; and/or
receiving, by the target network device from the source network device, a first PDCP sequence number that can be allocated by the target network device.

29. A handover method, wherein the method comprises:
receiving, by a terminal device, a handover command from a source network device, wherein the handover command indicates to hand over the terminal device from the source network device to a target network device, and the source network device and the target network device use different radio access technologies;
continuing, by the terminal device, to receive a data packet from the source network device by using a packet data convergence protocol PDCP entity; and
accessing, by the terminal device, the target network device, and receiving at least one data packet from the target network device by using the PDCP entity.

30. The method according to claim 29, wherein that the source network device and the target network device use different radio access technologies comprises:
protocol stacks corresponding to the terminal device and the source network device each comprise service data adaptation protocol SDAP layer processing, and none of protocol stacks corresponding to the terminal device and the target network device comprises SDAP layer processing.

31. The method according to claim 29 or 30, wherein the data packet received by the terminal device from the source network device comprises an SDAP header; and the method further comprises:
performing, by the PDCP entity, PDCP processing on the data packet received from the source network device, and sending, to an SDAP entity in the terminal device, the data packet on which PDCP processing is performed, to remove the SDAP header.

32. The method according to any one of claims 29 to 31, wherein the data packet received by the terminal device from the target network device does not comprise an SDAP header; and the method further comprises:
performing, by the PDCP entity, PDCP processing on the data packet received from the target network device.

33. The method according to any one of claims 29 to 31, wherein the data packet received by the terminal device from the target network device comprises a data packet comprising an SDAP header and/or a data packet not comprising an SDAP header; and
the method further comprises:
receiving, by the PDCP entity, an end marker packet from the target network device; and
identifying, by the PDCP entity based on the end marker packet, the data packet comprising the SDAP header and/or the data packet not comprising the SDAP header in the data packet received from the target network device.

34. The method according to claim 33, wherein when the terminal device identifies the data packet that is received from the target network device and that comprises the SDAP header, the method further comprises:
performing, by the PDCP entity, PDCP processing on the data packet, and sending, to the SDAP entity, the data packet on which PDCP processing is performed, to remove the SDAP header; and
receiving, by the PDCP entity from the SDAP entity, the data packet from which the SDAP header is removed; and
when the terminal device identifies the data packet that is received from the target network device and that does not comprise the SDAP header, the method further comprises:
performing, by the PDCP entity, PDCP processing on the data packet.

35. The method according to any one of claims 29 to 34, wherein the PDCP entity comprises a first processing unit and a second processing unit, the first processing unit corresponds to a security configuration of the source network device, and the second processing unit corresponds to a security configuration of the target network device; and
the method further comprises:
performing, by the PDCP entity by using the first processing unit, PDCP processing on the data packet received from the source network device, and performing, by using the second processing unit, PDCP processing on the data packet received from the target network device.

36. The method according to any one of claims 29 to 35, wherein the method further comprises:
performing, by the PDCP entity based on PDCP sequence numbers of the data packets, sorting and/or deduplication processing on the data packet received from the source network device and the data packet received from the target network device; and
sending, by the PDCP entity, the processed data packets to an upper layer in sequence.

37. A communication apparatus, wherein the apparatus comprises a unit configured to perform steps of the method according to any one of claims 1 to 6, comprises a unit configured to perform steps of the method according to any one of claims 7 to 11, comprises a unit configured to perform steps of the method according to any one of claims 12 to 16, comprises a unit configured to perform steps of the method according to any one of claims 17 to 22, comprises a unit configured to perform steps of the method according to any one of claims 23 to 28, or comprises a unit configured to perform steps of the method according to any one of claims 29 to 36.

38. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 6, enable the apparatus to perform the method according to any one of claims 7 to 11, enable the apparatus to perform the method according to any one of claims 12 to 16, enable the apparatus to perform the method according to any one of claims 17 to 22, enable the apparatus to perform the method according to any one of claims 23 to 28, or enable the apparatus to perform the method according to any one of claims 29 to 36.

39. A computer-readable storage medium, configured to store instructions, wherein when the instructions are executed, the method according to any one of claims 1 to 6 is implemented, the method according to any one of claims 7 to 11 is implemented, the method according to any one of claims 12 to 16 is implemented, the method according to any one of claims 17 to 22 is implemented, the method according to any one of claims 23 to 28 is implemented, or the method according to any one of claims 29 to 36 is implemented.

40. A communication apparatus, comprising a processor and an interface circuit, wherein
the interface circuit is configured to exchange code instructions with the processor; and
the processor is configured to run the code instructions to perform the method according to any one of claims 1 to 6, the processor is configured to run the code instructions to perform the method according to any one of claims 7 to 11, the processor is configured to run the code instructions to perform the method according to any one of claims 12 to 16, the processor is configured to run the code instructions to perform the method according to any one of claims 17 to 22, the processor is configured to run the code instructions to perform the method according to any one of claims 23 to 28, or the processor is configured to run the code instructions to perform the method according to any one of claims 29 to 36.

41. A computer program product, wherein when a computer reads and executes the computer program product, the computer is enabled to perform the method according to any one of claims 1 to 6, perform the method according to any one of claims 7 to 11, perform the method according to any one of claims 12 to 16, perform the method according to any one of claims 17 to 22, perform the method according to any one of claims 23 to 28, or perform the method according to any one of claims 29 to 36.

42. A communication system, wherein the system comprises a source network device, a target network device, and a terminal device, wherein
the source network device is configured to perform the method according to any one of claims 1 to 6, the target network device is configured to perform the method according to any one of claims 7 to 11, and the terminal device is configured to perform the method according to any one of claims 12 to 16; or
the source network device is configured to perform the method according to any one of claims 17 to 22, the target network device is configured to perform the method according to any one of claims 23 to 28, and the terminal device is configured to perform the method according to any one of claims 29 to 36.
